Europäisches Patentamt

European Patent Office

Office européen des brevets

(11) Publication number: **0 175 357 B1**

(12) **EUROPEAN PATENT SPECIFICATION**

(45) Date of publication of patent specification: **29.04.92**  (51) Int. Cl.⁵: **G06F 15/38**

(21) Application number: **85111799.4**

(22) Date of filing: **18.09.85**

(54) **Translation system.**

(30) Priority: **18.09.84 JP 195591/84**
**18.09.84 JP 195592/84**
**22.09.84 JP 199290/84**
**22.09.84 JP 199292/84**
**26.09.84 JP 201113/84**
**26.09.84 JP 201114/84**
**26.09.84 JP 201115/84**
**09.10.84 JP 212159/84**
**09.10.84 JP 212160/84**
**09.10.84 JP 212161/84**

(43) Date of publication of application:
**26.03.86 Bulletin 86/13**

(45) Publication of the grant of the patent:
**29.04.92 Bulletin 92/18**

(84) Designated Contracting States:
**DE GB**

(56) References cited:
**EP-A- 0 081 784**
**FR-A- 2 101 495**
**US-A- 4 460 973**

(73) Proprietor: **SHARP KABUSHIKI KAISHA**
**22-22 Nagaike-cho Abeno-ku**
**Osaka 545(JP)**

(72) Inventor: **Suzuki, Hitoshi**
**3-10-504, Ohmiya-cho 2-chome**
**Nara-shi Nara-ken(JP)**
Inventor: **Miyao, Kouji**
**1323-C11-402 Toriya-cho**
**Kashihara-shi Nara-ken(JP)**
Inventor: **Asano, Hazime**
**Yamato-ryo, 492 Minosho-cho**
**Yamatokoriyama-shi Nara-ken(JP)**
Inventor: **Tokunaga, Shinji**
**54-501, Tomio Danchi 4-3-1, Torimi-cho**
**Nara-shi Nara-ken(JP)**
Inventor: **Kugimiya, Shuzo**
**Mikasa-ryo, 492 Minosho-cho**
**Yamatokoriyama-shi Nara-ken(JP)**

(74) Representative: **Selting, Günther, Dipl.-Ing. et al**
**Deichmannhaus am Hauptbahnhof**
**W-5000 Köln 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(−/2.17/2.0)

COMMUNICATIONS OF THE ASSOCIATION OF COMPUTING MACHINERY, vol. 27, no. 4, April 1984, pages 322-329, New York, US; A.B. TUCKER, Jr.: "A perspective on machine translation: theory and practice"

Fujitsu Scientific & Technical Journal 21.3.82 Vol.18, No.1, Kawasaki, Japan Sawai et al.: "Knowledge Representation and Machine Translation" pages 117-133

**Description**

The present invention relates to a translation machine and, in particular, to a dialogical translation system for completing a translation in cooperation with a translation machine.

In the machine translation, it is inevitable to be obtained a plurality of resultant translations in general, since language itself has some ambiguities. Therefore, it is desirable to show plural possible translations so as to obtain a correct translation in a short time by selecting it among them.

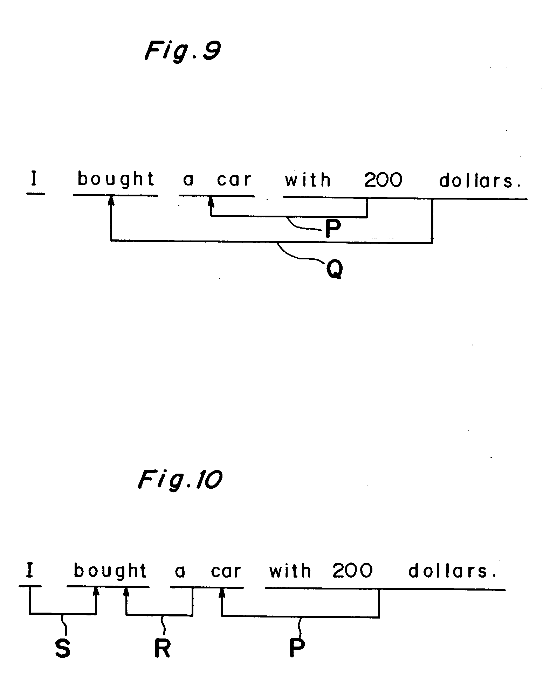

As an example, let us consider a translation of an English sentence "I bought a car with 200 dollars." into Japanese. This sentence has too possible subordinations as indicated respectively by arrows P and Q in Fig. 9. Further the word "car" has at least two meanings such as "automobile" and "cage" which are represented respectively as "JIDOSHA" and "KAGO" in Japanese. Also, the word "buy" has at least two meanings such as "purchase" and "bribe" which are represented respectively as "KAU" and "BAISHUSURU" in Japanese.

Needless to say, Japanese translations obtained are represented in Japanese. However, if these are represented with Japanese letters or with Roman letters in place of Japanese letters, it is impossible for Westerners to understand them. Therefore, Japanese word or sentence is represented in English as a re-translation thereof hereinafter as far as we can.

According to combinations of these possibilities, there are obtained eight possible translations as follows.

#1 I bribed a cage with 200 dollars.
#2 I bribed an automobile with 200 dollars.
#3 I purchased a cage with 200 dollars.
#4 I purchased an automobile with 200 dollars.
#5 I bribed a cage with 200 dollars.
#6 I bribed an automobile with 200 dollars.
#7 I purchased a cage with 200 dollars.
#8 I purchased an automobile with 200 dollars.

The correct translation is #8 of course.

When one possible translation is displayed in turn from #1 to #8, it is displayed eighth. Among these, the first to fourth are obtained according to the subordination wherein "with 200 dollars" modifies "car" as is indicated by an arrow P in Fig. 9.

The whole subordination of this case is indicated by arrows P, R and S in Fig. 10. This subordination is apparently incorrect. When a user recognizes it, he will operate a key for selecting next possible subordinate first and, then, operate key for selecting next meaning of a word successively. According to such operations, the correct translation will be obtained finally in the order of #1, #5, #6, #7 and #8.

A translation machine according to the preamble of the main claim is known from Fujiutsu Scientific and Technical Journal, 21 March 1982, V.18, No.1, KAWASAKI, JAPAN, Sawai et al. "Knowledge Representation and Machine Translation", pages 117-133. The known translation machine comprises a central processing unit for executing a translation process and other necessary processes, a main memory for storing translation programs, data entry means for entering an original sentence in a source language to be translated and a display means for displaying a translation of the original sentence into a target language. The subject matter of this document is a method for separating the translation program from the grammatical rules. For separating, an intermediate language is generated which is independent from the source language as well as the target language and merely needs to translate. The grammatical rules are considered upon transforming the source language into the intermediate language and the intermediate language into the target language. The known translation machine may produce wrong translations due to ambiguities of the words to be translated as well as of the subordinations in the original sentence of the source language being theoretically possible. Therefore, the known translation machine is less useful.

From EP-A-0 081 784, there is known a translation machine in which both the original sentence and its translation are displayed at the display means. The translation can be postedited via cursor moving and function keys. In the known translation machine, only one translation is output. Therefore, if the displayed translation is not correct, the operator only can get the correct translation by editing the sentence translated by the machine. The generation of several different translations so that the operator can select the correct one, as provided in the translation machine according to the invention, is not given in the known machine.

From A.F.I.P.S. Joint Computer Conference 1977, Vol. 46, pages 789-790 an interactive text-editing system in support of Russian translation by machine is known. In the known system the operator, from a series of alternate words supplied by the translation system, can select one word to remain and cause all the others to be deleted. Furthermore, the user can set up his own special dictionary consisting of word

EP 0 175 357 B1

pairs, one of which is the string to be replaced and the other is the replacing string. During editing session, a user need only point to an occurrence of a string to be replaced, strike the alternate word function key and a swap will be made.

It is the object of the invention to provide a translation machine in which correct translation can be obtained faster and easier.

According to the present invention, as claimed, this object is solved by translating the original sentence according to the subordinations between and among the words of the original sentence and displaying these translations so as to be able to designate one of them, wherein there are provided means for displaying the original sentence in the source language and the translated sentence in the target language being equivalent thereto on the display means in such a manner that the translated sentence correponds to the original sentence. Upon operating cursor movement keys for marking sentences and function keys of the data entry means, a plurality of translations are capable to be obtained according to the possible subordinations between and among the words.

According to a preferred embodiment of the invention, in case that a word is designated, all of the translations of the dictionary corresponding to the word designated can be displayed and one of them can be designated as a correct equivalent. Preferably, a word included in the designated sentence can be designated further, with the equivalent being capable to be displayed in a special display format such as highlight.

According to a further embodiment of the invention, the user's dictionary is provided for registering data about each of the words having not been contained in the translation dictionary.

Preferably in the translation machine there can be further provided means for designating one of several styles upon translating the original sentence and the translation can be generated after transforming it into the style designated.

The translation machine according to the invention can be provided with a buffer means for storing character data designated to be edited temporarily and, when designated, the data are transferred form a buffer in which they have been stored into said buffer means for an editorial proceeding.

These and other objects and features of the present invention will become apparent from the following description taken in conjunction with the preferred embodiment thereof with reference to the accompanying drawings in which:

Fig. 1 is a block diagram of a translation machine according to the present invention,
Fig. 2 is a block diagram of a translation module,
Fig. 3 is a diagram schematically showing levels in the machine translation,
Fig. 4 is a block diagram showing functions provided in the translation module,
Figs. 5(1), (2), (3), (4) and (5) show respectively contents of Buffers A, B, C, D and E of Fig. 2,
Fig. 6 is a flow chart showing a translation process according to the present invention,
Figs. 7(1), (2), (3) and (4) show examples of the method how to designate next possible translation respectively,
Figs. 8(1), (2) (3) and (4) show examples of possible modification relations respectively,
Figs. 9 and 10 show examples of possible modification relations respectively,
Figs. 11(1) and (2) show examples of the display according to the present invention,
Fig. 12 is a flow chart employed for specific display format,
Fig. 13 is a flow chart for correcting translation,
Fig. 14 shows a display obtained in the word for word translation mode,
Fig. 15 shows a modification relation of a sentence,
Fig. 16 is a flow chart for word for word translation,
Fig. 17 is a partial view of the display showing a manner of display,
Fig. 18 is a flow chart for registration with use of a user's dictionary,
Fig. 19 is a flow chart for showing the registration process,
Figs. 20(1), (2), (3), (4) and (5) show displays given at stages during proceeding the flow chart shown in Fig. 19,
Fig. 21 is a flow chart for searching a word which is not known in the full spelling thereof,
Fig. 22 is a flow chart showing a search program,
Fig. 23 is an example showing contents of the dictionary,
Figs. 24(1) and (2) are examples showing results of the searching,
Fig. 25 is a flow chart showing editorial process,
Figs. 26(1), (2), (3), (4), (5) and (6) show displays at each of stages upon proceeding the flow chart shown in Fig. 25,
Fig. 27 shows a Japanese text for showing types of characters,

4

Fig. 28 is a flow chart for deleting specified characters,

Fig. 29 is a flow chart for moving specified characters,

Figs. 30(1), (2) and (3) shows manners of deletion and movement,

Fig. 31 is a flow chart for deleting a sentence,

Fig. 32 is a flow chart for moving a sentence,

Figs. 33 and 34 show examples of the movement of a sentence,

Fig. 35 is a flow chart showing the main routine of a translation process,

Figs. 36(1), (2), (3), (4) and (5) show examples showing how the style of the sentence is transformed,

Fig. 37 is a flow chart showing the transformation of style, and

Fig. 38 is a flow chart showing the manner how to determine the end of a sentence.

Before the description of the present invention proceeds, it is to be noted that like parts are designated by like reference numerals throughout the accompanying drawings.

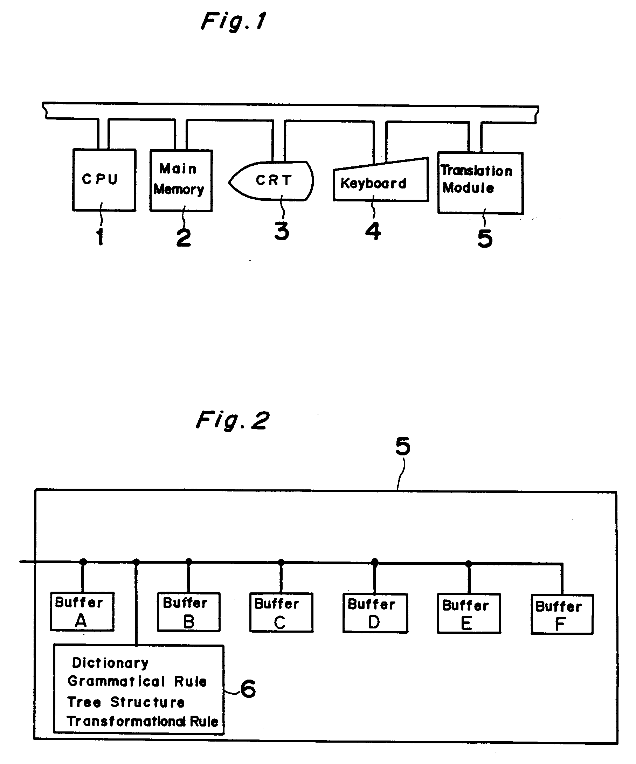

Fig. 1 shows a block diagram of a translation machine according to the present invention. The translation machine is comprised of a central processing unit 1 for processing translation process and other necessary processes, a main memory 2 for storing programs which are developed in order to execute necessary processes, a CRT display 3 for displaying possible translations etc., a key board 4 for entering data necessary for translation processing and a translation module 5 for storing data necessary for translation processing.

Fig. 2 shows an example of the translation module 5. The module 5 provides five buffers A, B, C, D and E, a table means 6 including a dictionary for translation, grammatical rules and transformational rules for the so called tree structure. As will be stated hereinafter, data obtained at each level of analysis in the proceeding of translation are stored into these buffers A to E respectively according to the level of analysis.

Hereinafter, general principle employed in the machine translation process will be described.

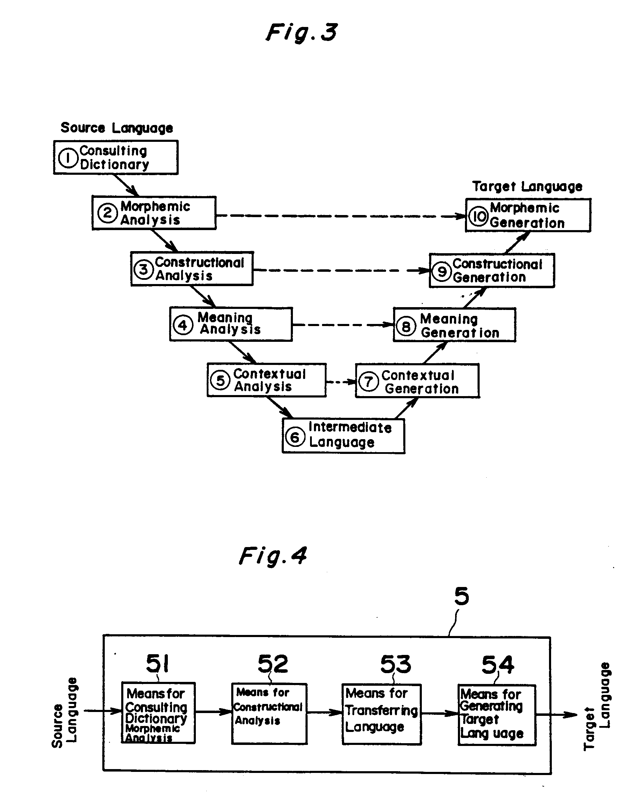

As shown in Fig. 3, there are provided many levels in the machine translation as is well known to those skilled in the art. When source language is entered, analysis thereof is proceeded in the order of consulting the dictionary (level #1), morphemic analysis (level #2) and constructional analysis (level #3). The machine translation method is classified into two categories according to the level to which the analysis is proceeded. One of them is so called "Pivot Method" in which the analysis is proceeded to the level #6 wherein the source language is transformed or translated into a so called intermediate language constructed by general ideas being independent on either of existing languages, and target language is generated according to the intermediate language obtained. The other is so called "Transfer Method" in which the analysis is proceeded to either one level of morphemic analysis (#2), constructional analysis (#3), meaning analysis (#4) and contextual analysis (#5) to obtain the internal structure of the source language and the target language is generated by transferring each structure obtained in each analysis level into structure of the level corresponding thereto represented in target language.

In Table 1, the contents of each analysis is listed up.

| Consulting Dictionary | To consult the dictionary and provided for translation about each word entered. |
| Morphemic Analysis | To obtain grammatical data such as the parts of speech and the equivalent about the words. To analyze the tense, the person and the number of the words. |
| Constructional Analysis | To determine the construction of the sentence such a subordination between or among words. |
| Meaning Analysis | To decide whether or not each construction obtained is correct in respect of the meaning. |
| Contextual Analysis | To understand the subject of original text and to clarify ambiguities and/or abbreviations. |

According to the present invention, the analysis is proceeded at least to the level (#3) of constructional analysis.

As shown in Fig. 4, the translation module 5 is functionally divided into means 51 for consulting dictionary and for analyzing morpheme, means 52 for analyzing construction, means 53 for transferring source language to target language and means 54 for generating the corresponding target language.

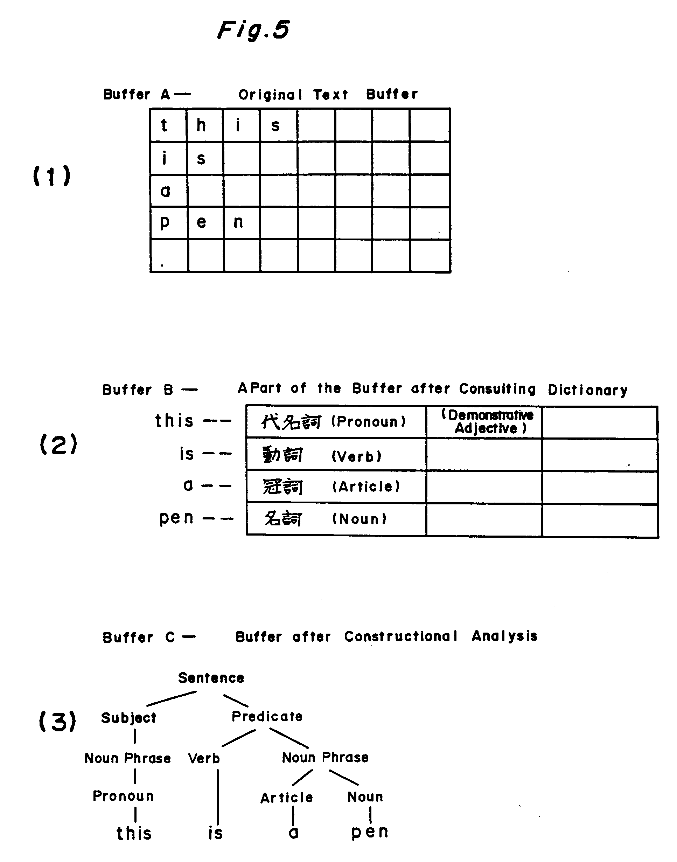

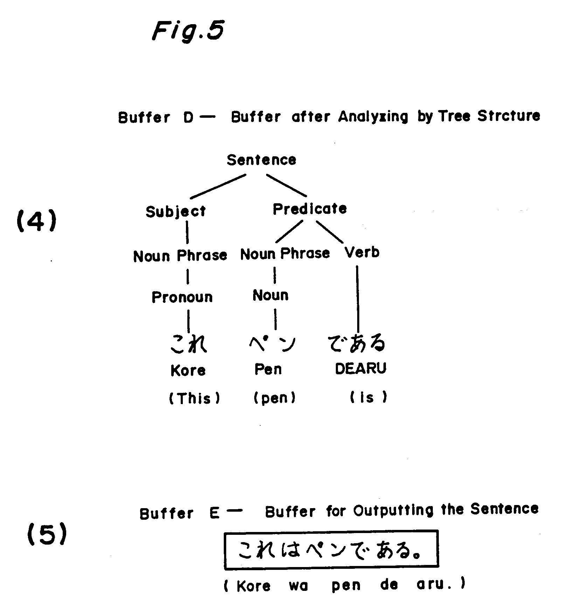

Fig. 5 shows the content of each buffer, shown in Fig. 2, during the process of translating English sentence "This is a pen." into Japanese.

First, the original sentence is read into Buffer A as is shown in Fig. 5(1). The means 51 of the module 5 consult the dictionary about each word of the original to obtain grammatical data and meaning thereabout. These data obtained are entered into Buffer B as is shown partially in Fig. 5(2).

In Fig. 5(2), data regarding to the part of speech are merely shown. Although the word "this" has multiple parts of speech, the part of speech of "this" in this sentence is identified to a specified one as the result of the analysis by the constructional analysis means 52 and the tree structure thereof is entered into Buffer C as shown in Fig. 5(3). In this process, analysis as shown in Table 2 is made based upon the grammatical rules (phrase structure rules) stored in Table means 6.

```
Table 2
```

| Word Group | → | Constituent |
|---|---|---|
| Sentence | → | Subject, Predicate |
| Predicate | → | Verb, Noun Phrase |
| Noun Phrase | → | Pronoun |
| Noun Phrase | → | Article, Noun |

The rule (→) means generally that, for instance, "Sentence is comprised of the subject and the predicate."

The language transferring means 53 execute analysis using transfer rules of tree structure similarly to the constructional analysis and the result obtained is stored into Buffer D. The target language generating means 54 supplements one or more suitable post-positional words functioning as an auxiliary to a main word and one or more auxiliary verbs so as to form a Japanese sentence and the result obtained is stored into Buffer E (Result Buffer) as shown in Fig. 5(5). This result is an output of the translation module 5.

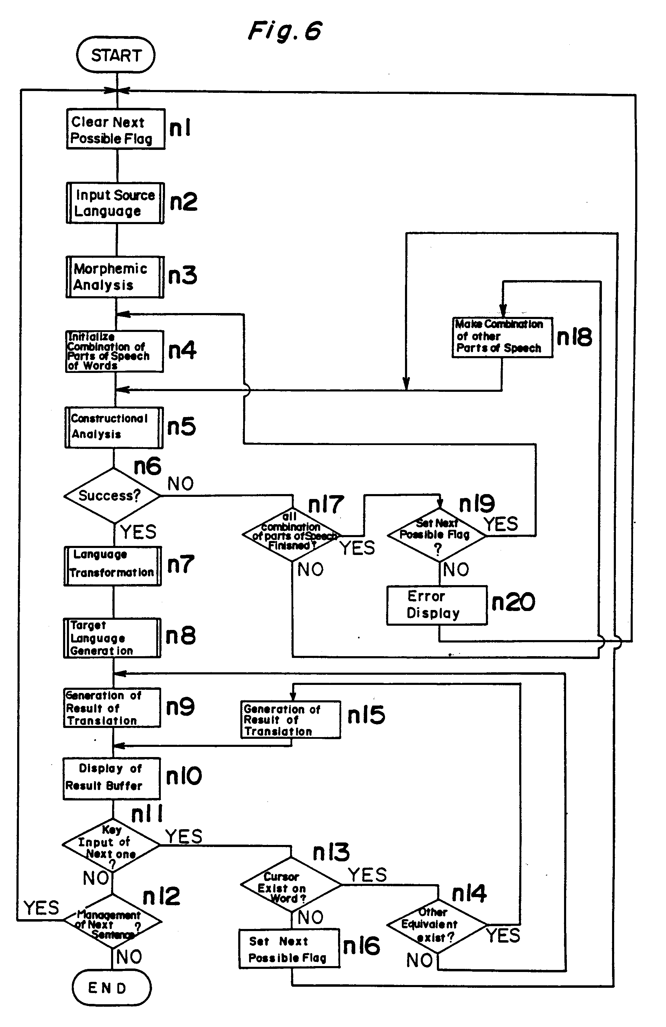

Fig. 6 shows a flow chart of a main routine program according to the present invention.

When the system is started, the flag provided for indicating the selection of next possibility is reset at step n1. This flag is used to indicate an error when any answer is not obtained in the constructional analysis. When source language is entered at step n2, consulting the translating dictionary and the morphemic analysis are executed at step n3.

At next step n4, a combination of "first" part of speech of each word. is initially set.

As an example, let us consider the sentence "Time flies like an arrow. " Since the words "time", "flies" and "like" have respectively plural parts of speech as shown in Table 3, there exist some possible combinations with respect to the part of speech.

Table 3

| Word | Time | flies | like | an | arrow |
|---|---|---|---|---|---|
| Part of | noun | noun | conjunction | article | noun |
| Speech | verb | verb | verb preposition | | |

In the example of Table 3, there is set initially a series of parts of speech such as noun-noun-conjunction-article-noun. At next step n5, the series of parts of speech is analyzed with respect to the construction thereof. Then, it is decided, at step n6, whether the constructional analysis made at step n5 is successful or not.

When decided successful, the process is proceeded to step n7 wherein language transfer is made and then to step n8 for generating target language and, at step n9, a translation is generated with use of each of first equivalent of first part of speech. At step n10, the translation obtained is displayed on the CRT display 3.

6

It is decided whether the next possible translation is to be generated or not at step n11 and, at next step n12, it is decided whether the next sentence is to be translated or not. If there is no need to translate, the translation process is completed.

When the next possible translation is required at step n11, it is decided whether a cursor is positioned on a word in the sentence to be translated. When the cursor is positioned on the word, the process is proceeded to next step n14 and it is decided whether or not the word designated by the cursor has another meaning or equivalent.

When the word has it, the next translation is generated with use thereof at step n15. If the word has not next or another meaning, the process is returned to step n9.

If the cursor is not on the word but at the end of sentence, the process is proceeded to step n16 and the flag for the next possible translation is set threat. When the flag is set, the process is returned to step n5 to execute next constructional analysis. The constructional analyzing means 52 has such a function that, if the series of parts of speech is not changed in the next constructional analysis, another modification relation is found out. If another modification is obtained, steps n7 to n11 are executed successively as mentioned above.

If it failed to obtain another modification, the process is proceeded to step n17 and it is decided whether all of combinations with respect to the part of speech have been considered or not.

If it is decided that there exists one or more combination, one new combination is designated at step n18 and the constructional analysis is done about new combination at step n5. When there is no further combination of the part of speech, the process is proceeded from step n17 to step n19 and it is decided whether or not the flag for next translation is set.

When the flag is set, the process is returned to step n4. Only when the flag is not set, namely when answer is not obtained in the constructional analysis at step n5, an error message is displayed at step n20 and the process is returned to step n1.

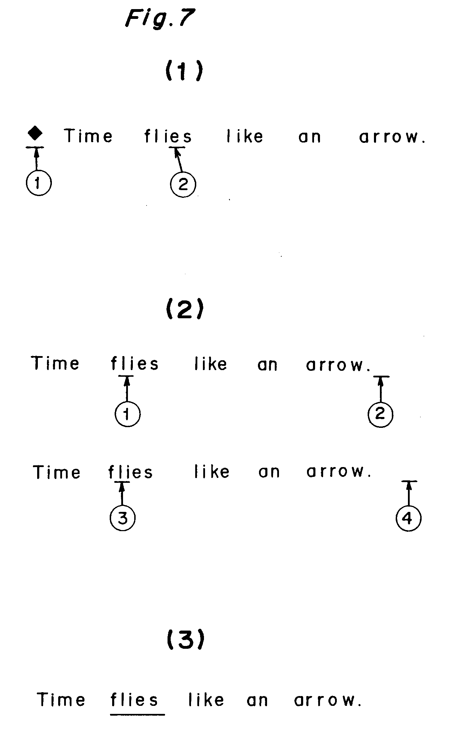

Fig. 7 shows examples of the method how to designate next possible translation in the case of English as source language. As indicated by an arrow 2 in Fig. 7(1), if the cursor is positioned at one of words, for example at the word "flies", next equivalent of the word designated by the cursor is employed. If the cursor is positioned before the heading of the sentence as indicated by an arrow 1, a next construction is employed. In this example, it is necessary to provide a set of cursor move keys and a key for designating next possible translation.

In the second example shown in Fig. 7(2) wherein the cursor is positioned at the position indicated by an arrow 1 or 3, a next equivalent about the word "flies" is given. When the cursor is positioned at the position of the period (also applied to the question mark and the exclamation mark) as indicated by an arrow 2, or when it is positioned after the end of the sentence as indicated by an arrow 4, the next possible construction is given.

In this example, there is provided a set of cursor move keys and a key for designating next possible translation similarly.

In the third example (not shown in Fig. 7), there is provided a set of cursor move keys, a key for designating next equivalent and a key for designating next possible construction. When the last one is operated, next possible construction is given. Also, when the key for designating next equivalent is operated, the next equivalent is given about the word being designated by the cursor.

In the fourth example shown in Fig. 7(3), there is provided one or more special cursor move keys for designating every word, as indicated by the cursor ka, together with the ordinary set of cursor move key. When the key is operated once, the cursor is moved to the position of next word. According to the example, the cursor is moved rapidly when compared with the first or second example.

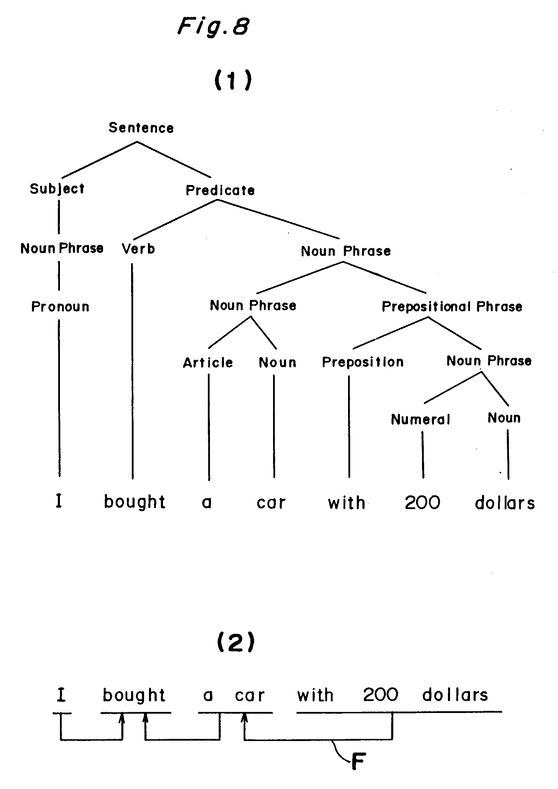

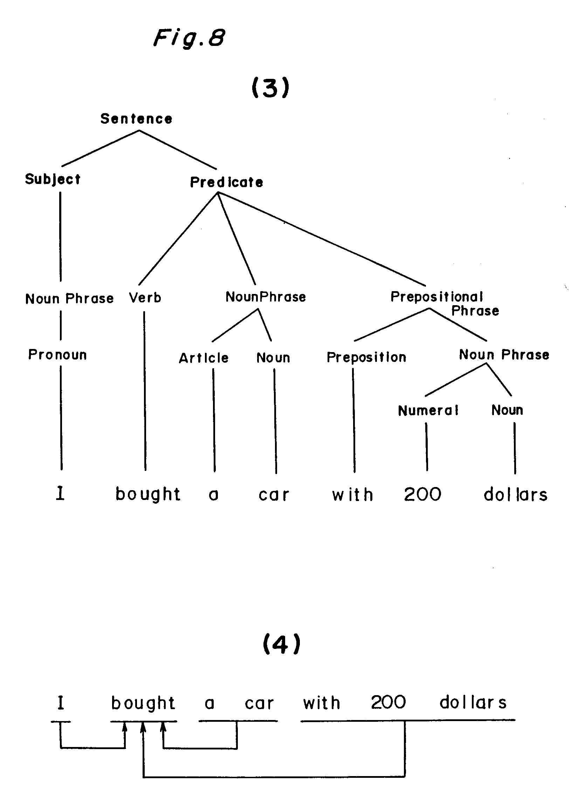

Fig. 8 shows the method for displaying modification relation.

Figs. 8(1) and (3) show respectively the result of the constructional analysis being stored in Buffer C as is indicated in Fig. 5(3).

A possible modification relation with respect to the tree structure obtained by the constructional analysis is indicated as shown in Fig. 8(2) or (4). In order to indicated the modification relation, rules are predetermined in such a manner defined as follows. For example, when a tree structure such as ["noun phrase" →"noun phrase (a car)" and "prepositional phrase (with 200 dollars)"] is obtained, the noun phrase "a car" and the prepositional phrase "with 200 dollars" are underlined separately and an arrow is so drawn as to point from the prepositional phrase to the noun phrase as indicated by the arrow F.

According to such rules, it becomes possible to indicate a modification relation explicitly. Further, it makes correction operation easier to display such a modification relation, since one or more incorrect portions are found out soon.

7

Moreover, in the case that the next possible answer can be designated in either of two ways, namely as a next equivalent of a word or as a next possible construction, a number of key touch necessary for obtaining a correct translation is considerably decreased.

Further, the display method as mentioned above may be advantageous in learning language.

According to the present translation system, a user can select a correct translation among a plurality of possible translations in a short time.

〈Display System〉

For example, let us consider a translation of English original "This is a big apple tree." into Japanese.

As the result of the constructional and meaning analysis, each Japanese equivalent word is obtained corresponding to each English word as shown in Table 5.

Table 5

| Order of words of Translation | Japanese Equivalent | Order of words of Original |
|---|---|---|
| 1 | kore wa | 1 (This) |
| 2 | ippon no | 2 (a) |
| 3 | okina | 3 (big) |
| 4 | ringo no | 4 (apple) |
| 5 | ki | 5 (tree) |
| 6 | desu | 6 (is) |
| 7 | . | 7 (.) |

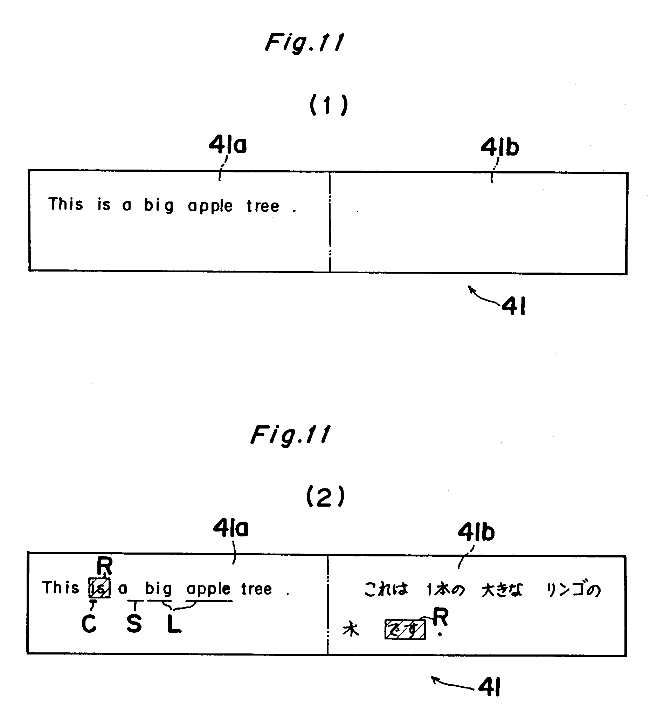

According to the result obtained, Japanese translation is displayed together with the English original as is shown in Fig. 11. If the result displayed is correct, the process is proceeded to the translation of next sentence or is finished. If the result is incorrect, it is corrected according to the following manner.

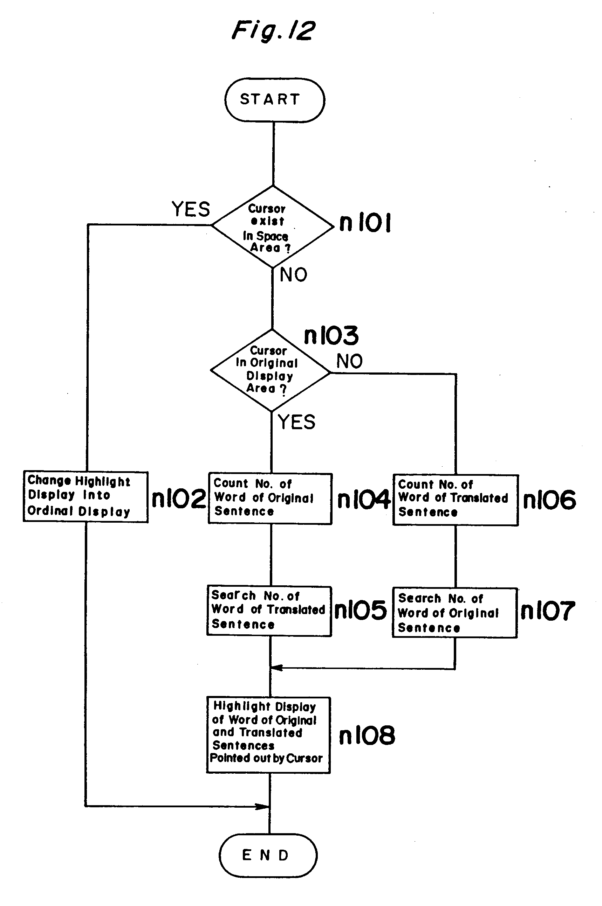

Fig. 12 shows a flow chart of a program developed for the correction operation. As is shown in Fig. 11, the English original is displayed in an area 41a provide left hand side of the display area 41 and the Japanese translation is displayed in a right hand side area 41b.

The cursor C is positioned, in this example, at the position of "i" of "is" in the original display area 41a. The cursor C can be positioned in the blank area as indicated by "S" or in the word display area as indicated by "L".

Referring now to Fig. 12, at step n101, it is decided whether or not the cursor C is positioned in the blank area S. When the cursor C is positioned in the blank area S, the process is proceeded to step n102 and, at step n102, the word having been displayed in an emphasis manner such as a highlighting is returned to normal display.

When the cursor C is positioned in the word display area L, it is decided, at step n103, whether the cursor C is positioned in the original text display area 41a or in the translation display area 41b.

If the cursor is positioned in the original text display area 41a, the process is proceeded to step n104 and, at step n104, the order of the word indicated by the cursor is counted. At step n105, the order of the equivalent corresponding to the original word is searched.

If the cursor is positioned in the translation display area 41b, the process is proceeded to step n106 and, at step n106, the order of the translation is calculated. At step n107, the order of the equivalent word indicated by the cursor C is searched. At step n108, both of the word searched at step n105 or n107 and the word indicated by the cursor are displayed in an emphatic manner such as a highlighting as indicated by a reference R in Fig. 11. For instance, in the case that the cursor C is positioned at "i" or "s" of the word "is" of the original text, the order of the original word is two and the order of the equivalent word corresponding thereto is six, and therefore, the word "is" and the Japanese word "desu" are highlighted.

According to the display method mentioned above, the correspondence between the original word and the equivalent can be explicitly recognized and, therefore, efficiency in the translation operation is increased.

8

EP 0 175 357 B1

⟨Translation System⟩

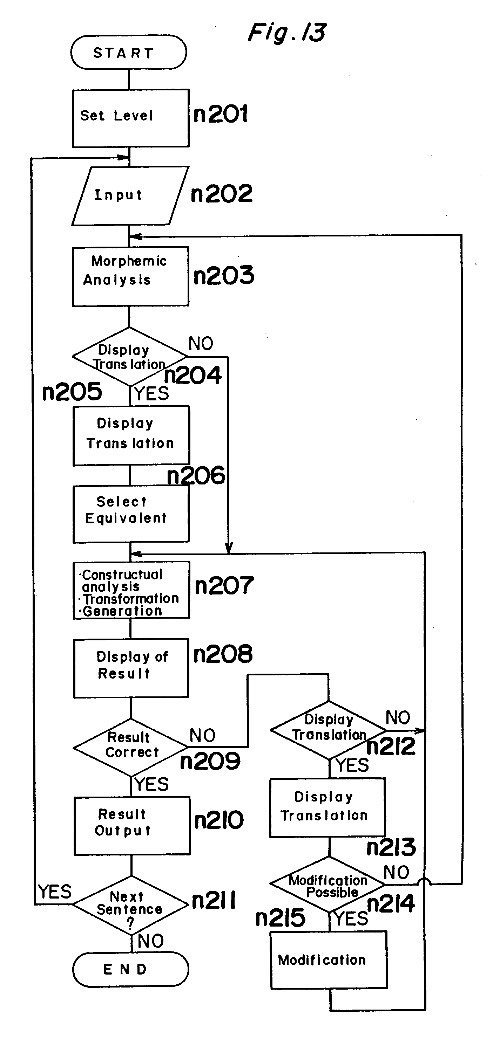

Fig. 13 shows a flow chart of a program for executing translation.

At step n201, the level of analysis for executing the assignment of equivalent is set. At step n202, an original text to be translated is entered. At step n203, the morphemic analysis is made with respect to the text entered. At step n204, it is decided whether the assignment of equivalent is to be displayed or not. If it is to be done, the process is proceeded to step n205. At step n205, there is displayed the assignment of equivalent together with the part of speech of each word.

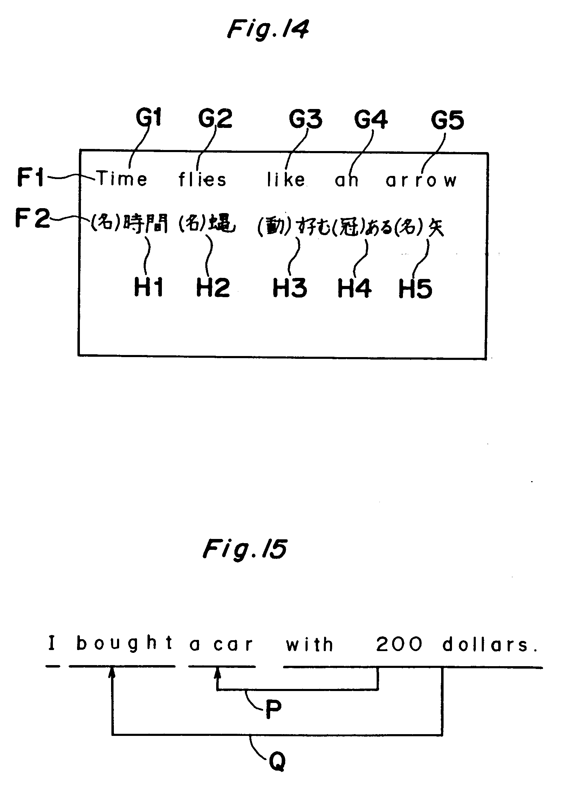

As is shown in Fig. 14, the assignment of equivalent means that each equivalent to each word of the input sentence F1 to be translated is assigned to corresponding original word in a word for word manner as indicated by an arrow F2. In each parentheses positioned before each equivalent, the abbreviation of each part of speech is displayed.

In Fig. 14, the original words constituting the input sentence are indicated by references G1 to G5 and the equivalents are indicated by references H1 to H5. Since, in the morphemic analysis, the sentence is dissolved into morphemes and each morpheme is consulted with the translation dictionary, each word of source language usually has a plurality of equivalents in this morphemic analysis. At step n206, the correct equivalent is chosen among the plural equivalents.

If the assignment of equivalent is decided not to be done, the process is proceeded to step n207.

At step n207, the constructional analysis, the transformation and the generation mentioned above are made to obtain a translation. At step n208, the result of translation obtained at step n207 is displayed on the CRT display. At step n209, it is decided whether the translation displayed is correct or not. If it is correct, the translation is printed out by the printer 7 at step n210 and, then, the process is proceeded to step n211.

If it is incorrect, the process is proceeded to step n212. At step n212, it is decided whether the assignment of equivalent is to be displayed or not.

In the case that the operator considers that it is possible to obtain a correct translation if the constructional analysis etc. are executed again at step n207 or in the case that it is decided not to be done at step n212, the process is returned to step n207.

Although the step n212 is provided to decide whether the process is to be returned to step n207, it is also possible to return to step n202 or step n203 if it is considered desirable in view of contents of the incorrect translation.

When the assignment of equivalent is decided to be displayed at step n212, the process is proceeded to step n213 and, at step n213, the assignment of equivalent is displayed. At next step n214, it is decided whether or not correction about the incorrect translation is possible at step n207.

If it is decided impossible, the process is returned to step n203 and the morphemic analysis is executed again. However, there may be a case in that the correction is impossible even when the morphemic analysis is made. In such a case, the process is returned to step n202 not to step 203 and a next sentence is entered at step n202.

If it is considered to be possible at step n214, the process is proceeded to step n215. At step n215, the process including selection of equivalents is executed and, then, the process is returned to step n207.

At step n211, it is decided whether there is a next sentence to be translated or not. If there is a next sentence, the process is returned to step n202 in order to enter it. If there is not any next sentence to be translated, the process is completed.

According to this preferred embodiment, the assignment of equivalent is displayed explicitly and, therefore, it becomes possible to decide whether or not the correct translation is obtained and/or to find out what is to be corrected in the incorrect translation.

The idea of assignment of equivalent is available to each phrase, each idiom or each clause.


⟨Printing System⟩

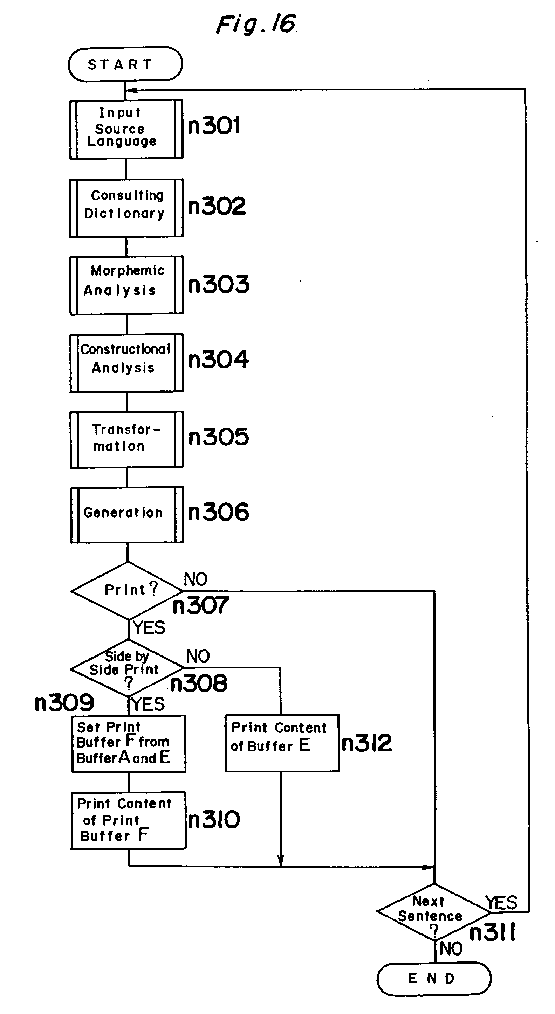

Fig. 16 shows a flow chart of a program for pointing out.

At step n301, an original text, namely source language is entered. AT step n302, the translation dictionary is consulted with and, at step n303, the morphemic analysis is executed and, at step n304, the constructional analysis is made. Further, at step n305, the language transfer is executed and a translation is generated at step n306. The steps n301 to n306 are subroutines.

At step n307, it is decided whether the translation generated is to be printed out.

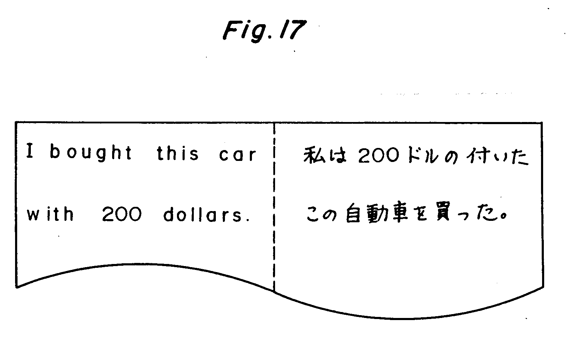

When it is decided to be printed out, the process is proceeded to step n308. At step n308, it is decided whether the translation is to be printed side by side with the original. When it is chosen, the process is proceeded to step n309. At step n309, the original text stored in the Buffer A and the translation stored in the Buffer E are transferred to the Buffer F provided for print. At step n310, data stored in the Buffer F is printed by the printer 7. When the printing is finished, the process is proceed to step n311. The print format is so set as to print out the translation side by side with the original as is shown in Fig. 17.

If the print is not selected at step n307, the process is proceeded to step n311.

If the side by side print format is not selected at step n308, the process is proceeded to step n312. At step n312, only the translation scored in the Buffer E is printed out by the printer 7.

At step n311, it is decided whether there is a next sentence to be translated. If there is a further sentence to be translated, the process is returned to step n301 to execute the translation thereof.

If there is no further sentence, the process is completed.

According to the print format mentioned above, it can be done easily to compare the translation with the original and, therefore, proceedings for obtaining a correct translation are simplified.

Although the print format is mentioned in this preferred embodiment, the present idea is available to the display format of the printer.

⟨Dictionary Function⟩

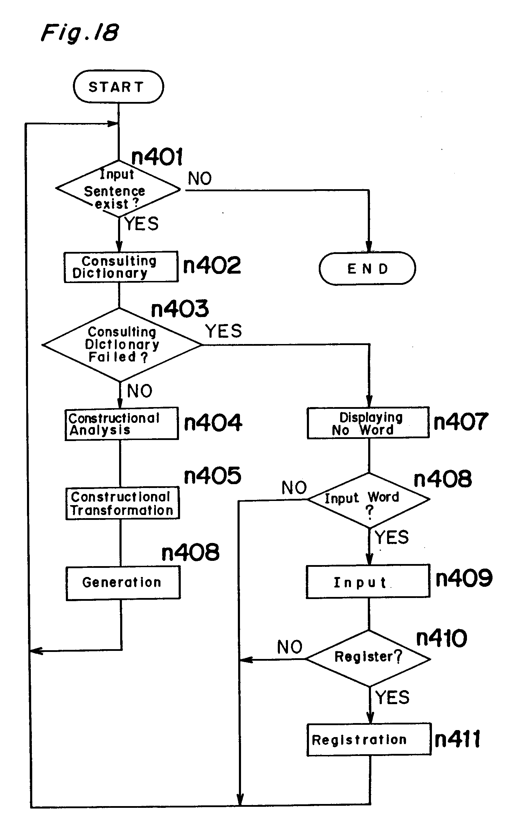

Fig. 18 shows a flow chart of a program developed for the dictionary function.

At step n401, it is decided whether an original text has been entered into the Buffer A. If there is no text to be translated, the process is completed.

If there is a text to be translated, the process is proceed to step n402 and the translation dictionary is consulted with thereat. At step n403, it is decided whether the dictionary is failed to consult with. If failed, the process is proceed to step n407.

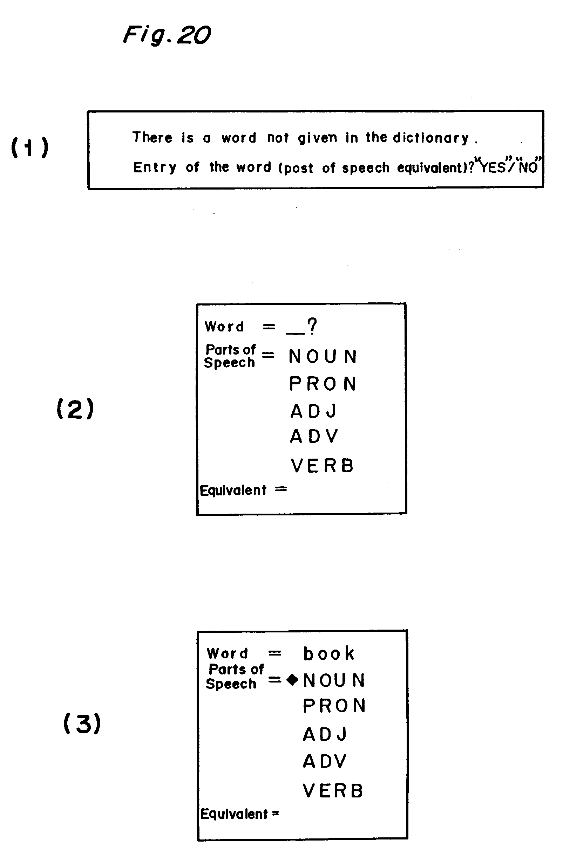

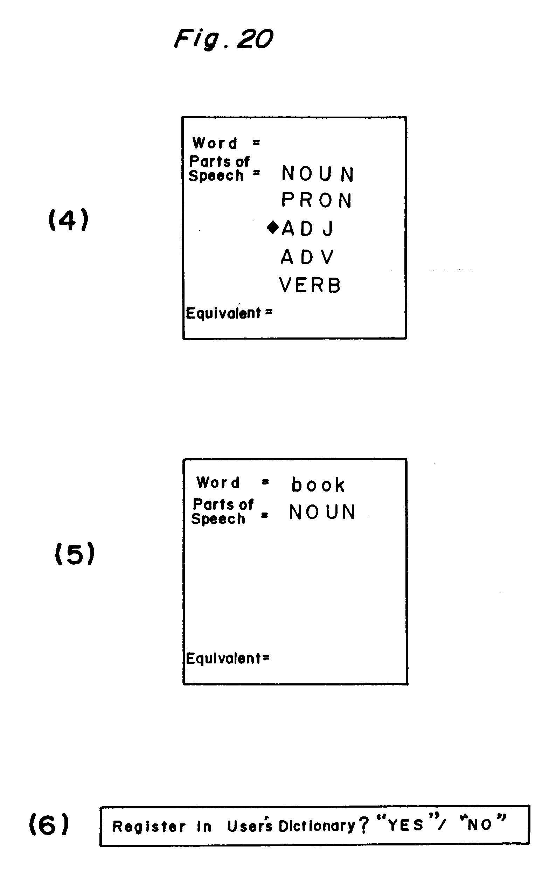

At step n407, a message indicating there is a word not given in the dictionary is displayed as shown in Fig. 20(1). Then, it is decided whether the word is to be entered or not at step n408.

When the failure in consulting dictionary is caused by miss spelling, the operator enters "NO" with the keyboard and then pushes the return key. When the return key is pushed, the message is disappeared and the process is returned to step n401. Then, the operator enters the correct spelling with the keyboard.

When "YES" is entered at step n408, the process is proceeded to step n409, data about the word is entered thereat. This data entry is proceeded according to a program developed therefor.

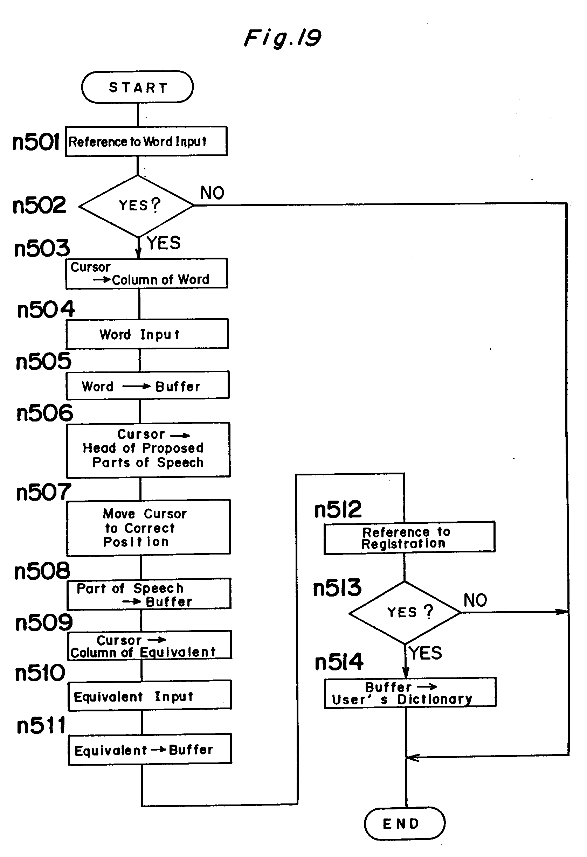

Referring to Fig. 19, steps n501 and n502 correspond to steps n407 and n408 respectively. At step n503, the cursor is automatically displayed at the position which the word is to be entered as shown in Fig. 20(2). Namely, the user can enter the word directly without operations for moving the cursor. At step n504, the word is entered with the keyboard and then, the return key is pushed to proceed to step n405. At step n405, the word entered is stored in the buffer. At next step n406, the cursor is moved to the head position of a plurality of parts of speech to be selected. As shown in Fig. 20(3), a mark "♦" is displayed at the position of the cursor to indicate the part of speech explicitly.

At step n507, the cursor is moved to the position of the correct part of speech. If the part of speech indicated at the initial position of the cursor is correct, only the return key is pushed. Next, the process is proceeded to step n508 and the part of speech indicated by the cursor is stored into the buffer. At next step n509, the cursor is moved to the heading position of the item of equivalent as shown in Fig. 20(4). The user enters one or more equivalents with the keyboard and then pushes the return key at step n510. The equivalents entered are stored into the buffer at step n511. At that time, all the data related are displayed on the CRT display as shown in Fig. 20(5).

At step n512, a message readable as "Is entry data to be registered in the user's dictionary?" is displayed as shown in Fig. 20(6).

It is decided, at step n513, whether an answer to the inquiry is affirmative or not. This step n513 corresponds to the step n410 of Fig. 18. If the answer is "NO", the entry proceedings are completed and the translation proceeding is continued.

If the answer is "YES", the process is proceeded to step n514 corresponding to step n411 of Fig. 18. At step n514, the original word, the equivalent thereto, the part of speech are written into the user's dictionary and, then, the process is completed to return to step n401 of Fig. 18.

According to the present system, if an input word is not given in the dictionary provided in the system, this fact is displayed. Moreover, the translation process is favorably proceeded by entering data such as an original word, one or more equivalent and the part of speech.

10

⟨Word Search⟩

If there is a word all of the spell of which are not known to the operator upon entering it, he pushes a word searching key provided therefor.

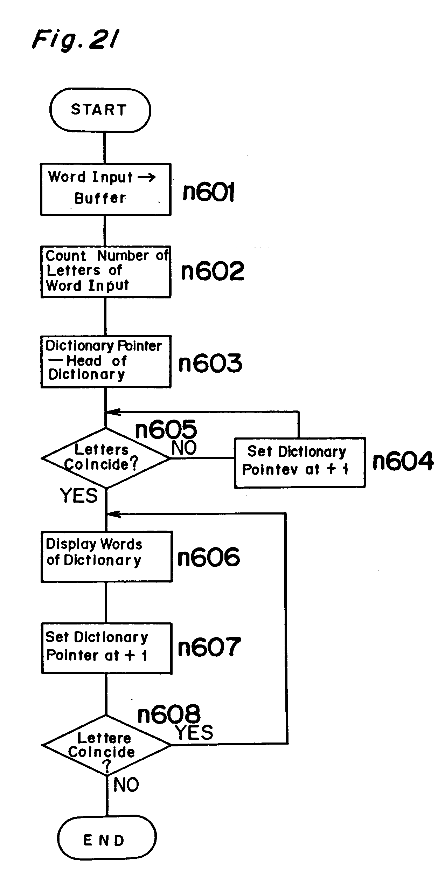

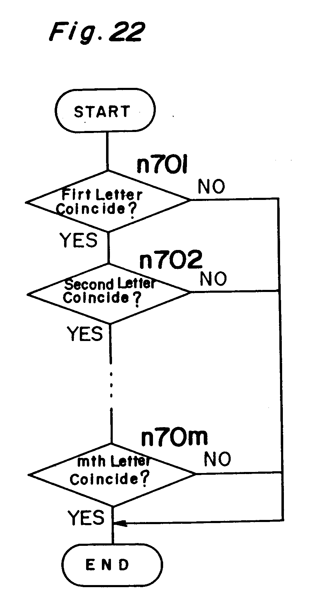

Referring to Fig. 21, the input word is stored into the buffer at step n601. Then, the number m of characters of the input word is counted at step n602. A dictionary pointer is set at the head of the dictionary at step n603. A word searching routine is started at step n605. The word searching routine is shown in Fig. 22.

At step n701 of Fig. 22, it is decided whether the first character of the word designated by the dictionary pointer corresponds to that of the word stored in the buffer. If they correspond to each other, the comparison between second characters is made at step n702.

If they do not correspond to, the process is proceeded to step n604 of Fig. 21. At step n604, the dictionary pointer is increased by "+1" and the process is proceeded to step n605 in order to compare with respect to the next word of the dictionary.

If the second characters correspond to each other at step n602, the process is proceeded to step n603 at which the third characters are compared with each other.

If the second characters do not correspond to, the process is proceeded to step n604 at which the dictionary pointer is increased by "+1".

The comparisons mentioned above are made "m" times at steps from n701 to n70m. If there is at least one word having "m" characters same to those of the input word, the word designated by the dictionary pointer is displayed on the CRT display.

Next, the process is proceeded to step n607 and the dictionary pointer is increased by "+1". At step n608, the process is proceed to the routine of Fig. 22.

If there is a word in the dictionary having the same "m" characters, it is displayed on the CRT display. If there is no word, the process is completed.

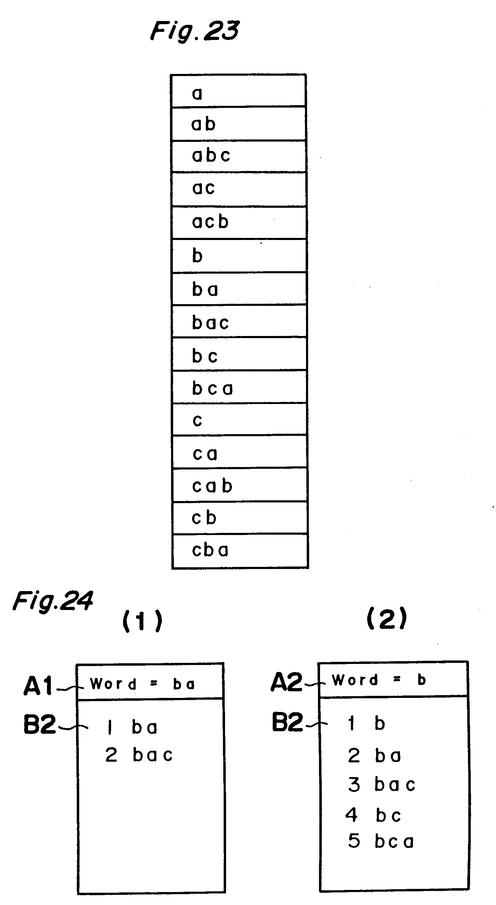

For example, consider a dictionary as shown in Fig. 22. As indicated in Fig. 24(1), when the word "ba" is entered into the area A1 with the keyboard and the return key is pushed, two words having 2 characters "ba" are displayed in the area B1. If only "b" is entered into the area A2, as is shown in Fig. 24(2), five words having "b" as a heading character are displayed in the area B2 as the result of the word search. The operator can designated or identify easily the objective word among words displayed.

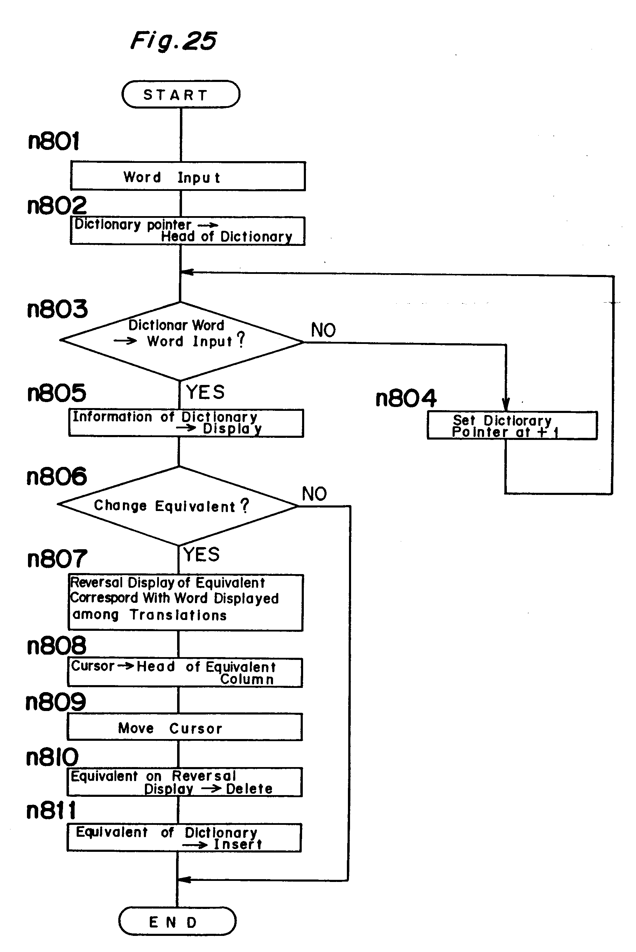

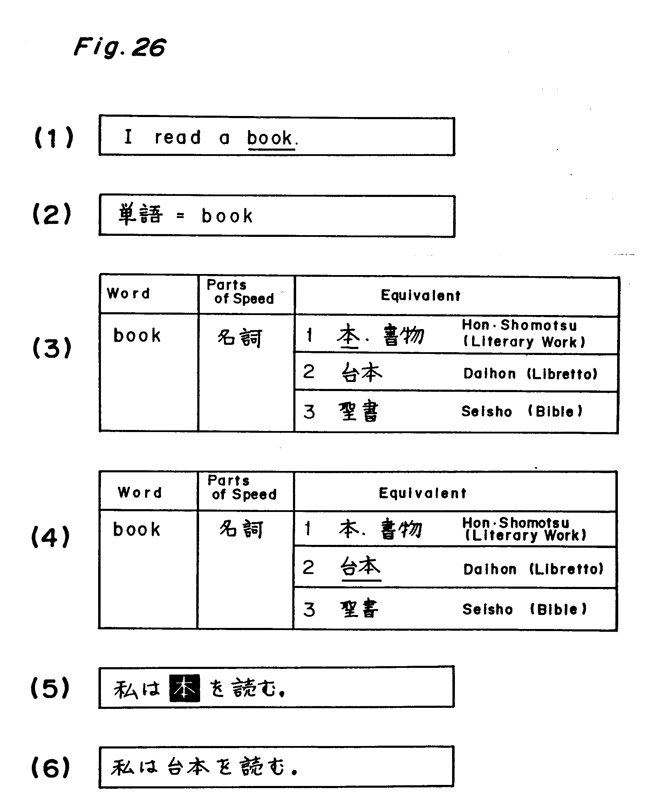

Referring to Fig. 25, a sentence of the source language "I read a book" as shown in Fig. 26(1) is entered at step n801.

If the operator wants to know informations about the word "book", he moves the cursor to the position of "book" and pushes a function key, for example a dictionary display key provided on the keyboard in order to proceed the process to step n802.

Otherwise, the word "book" is entered with the keyboard and, then, the return key is pushed to proceed the process to step n802, as is shown in Fig. 26(2).

At step n802, the dictionary pointer is set so as to position at the head of the dictionary provided. At next step n803, it is decided whether or not the word of the dictionary indicated by the dictionary pointer and the word designated by the cursor or entered correspond to each other. If not correspond, the dictionary pointer is increased by "+1". Namely, the dictionary pointer is set to the next word of the dictionary and the next word is compared with the word input at step n803. If two words correspond to each other, the process is proceeded to step n805 at which the contents of the word indicated by the pointer are displayed on the CRT display as shown in Fig. 26(3).

At next step n806, it is inquired to the CRT display whether the equivalent is to be replaced with respect to the original sentence. So called "multi-window" format is employed as the display format of the inquiry, with respect to the contents of the dictionary displayed. If it is not necessary to replace the equivalent with another one, "NO" is entered and then the return key is pushed to complete the translation process.

If it is necessary, "YES" is entered to proceed the process to step n807. At step n807, the equivalent "hon" corresponding to the word "BOOK" corresponding to the word "book" in the translation displayed in highlighted, as shown in Fig. 26.(5) At this time, the cursor is positioned at the head in the item for equivalents, namely at the position of the equivalent "hon".

At next step n809, the cursor is moved to a position of the word desired and the return key is pushed. Then the equivalent having been highlighted is deleted at step n810 and, in place of that, the equivalent indicated by the cursor is inserted as is shown in Fig. 26(4)

According to the present embodiment, contents of a word in the dictionary are displayed and the replacement of the equivalent is easily done by moving the cursor.

Let us consider the edition of the Japanese language. Characters used in Japanese text are as follows;
(1) Chinese characters
(2) Hiragana
(3) Katakana
(4) Arabic Numerals
(5) Marks or Symbols (".", "," etc.)

These characters are easily identified respectively by character codes assigned to them. In this embodiment, three types A, B and C are defined to classify single or combined characters. Hereinafter, a reference symbol "STR" is introduced to indicate "character row". The type A is defined as a combination of at least two of one or more Chinese characters and/or one or more Katakanas and/or one or more Arabic numerals.

Examples belonging to Type A are shown in Table 8.

## Table 8

| Type A | Example |
|---|---|
| Chinese STR+Katakana STR | 集団ヒステリー (mass hysteria) |
| Katakana STR+Chinese STR | カーター大統領 (President Carter) |
| Arabic STR+Chinese STR<br>　　　　+Katakana STR | 3000万ドル (30 million dollars) |
| Arabic STR+Chinese STR | 2万人 (20 thousand peoples) |
| Chinese STR | 連邦政府 (Federal government) |
| Katakana STR | アメリカ (America) |

Type B is defined as Hiragana STR namely one or more Hiraganas.

Type C is defined as one or more marks or symbols.

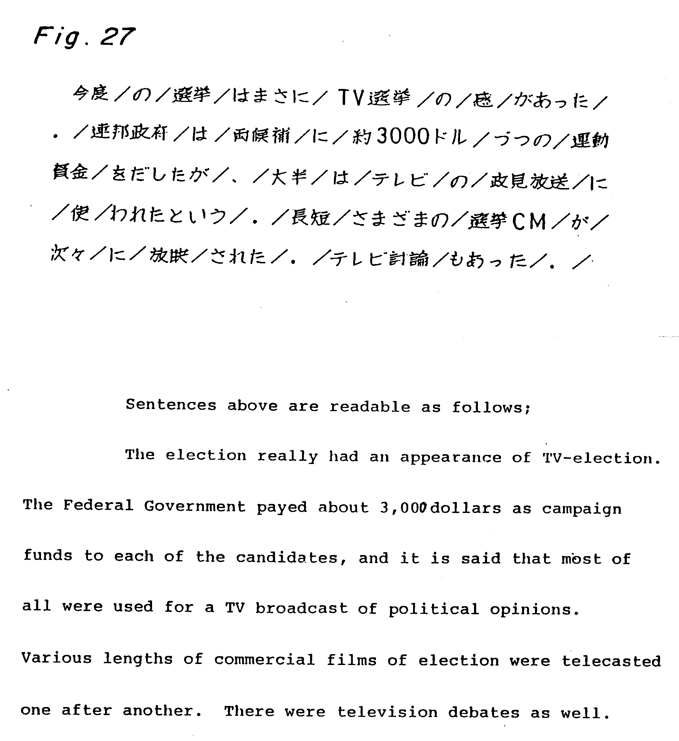

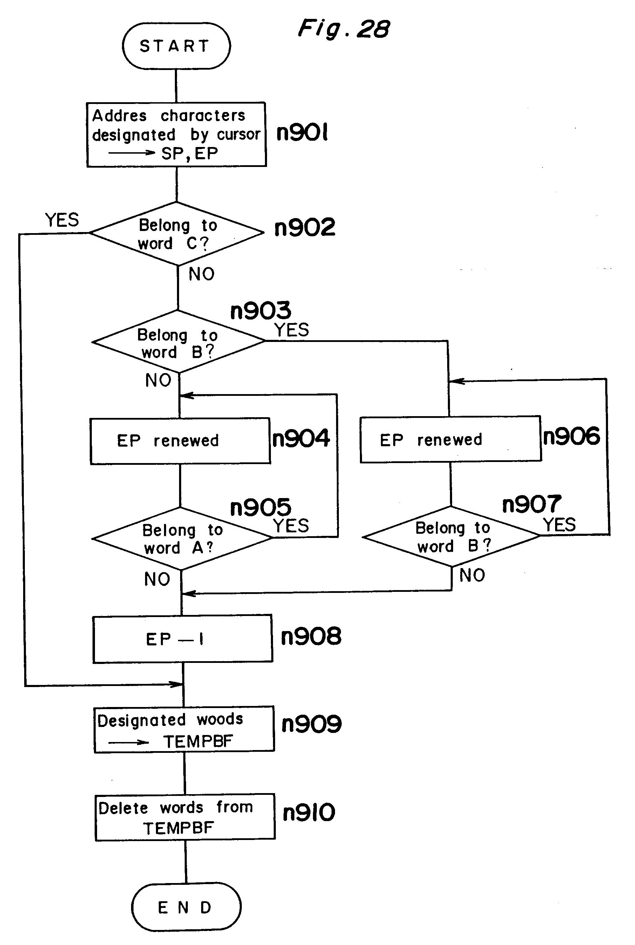

Let us consider to partition a text with "/" at every type as shown in Fig. 27. Fig. 28 shows a flow chart of a program for executing deletion of one or specified type.

Let us assume that a text comprised of a plurality of sentences has been stored in the text buffer TEXTBF.

At step n901, the start and end addresses of characters designated by the cursor are stored into a "start pointer SP" and a "end pointer EP" respectively.

At step n902, it is decided whether or not the character indicated by the cursor is belonged to Type C. If it belongs to Type C, the process is proceeded to step n909 which will be mentioned later. If it is not Type C, the process is proceeded to step n903 at which it is decided whether the characters indicated by the cursor belong to Type B.

If it belongs to Type B, the process is proceeded to n906 and, if it does not belong to Type B, the process is proceeded to step n904. AT step n906 or n904, the end pointer EP is renewed.

At step n905, it is decided whether the characters indicated by the cursor belongs to Type A. If it is Type A, the process is returned to step n904 at which the end point EP is renewed.

When the characters indicated by the cursor belong to Type B, the end pointer EP is renewed at step n906. At step n907, it is decided whether the next characters belong to the Type B. If it is the Type B, the process is returned to step n608 to renew the end pointer EP.

If it is not the Type A, the process is proceeded to step n908 at which the end pointer EP is decreased by "1".

According to steps n902 to n908, the last end of the characters indicated by the cursor is appointed as the end pointer EP in the case that the characters belong to Type A, the last end of the same is appointed as the end pointer EP in the case that the same belong to Type B and, if the single character belongs to Type C, it is appointed as both of the start pointer and the end pointer. Thus, one or more characters to be deleted are designated.

One or more characters designated above are stored into a "temporary buffer TEMPBF" at step n909. Then, one or more characters are deleted from the text stored in the text buffer TEXTBF at step n910.

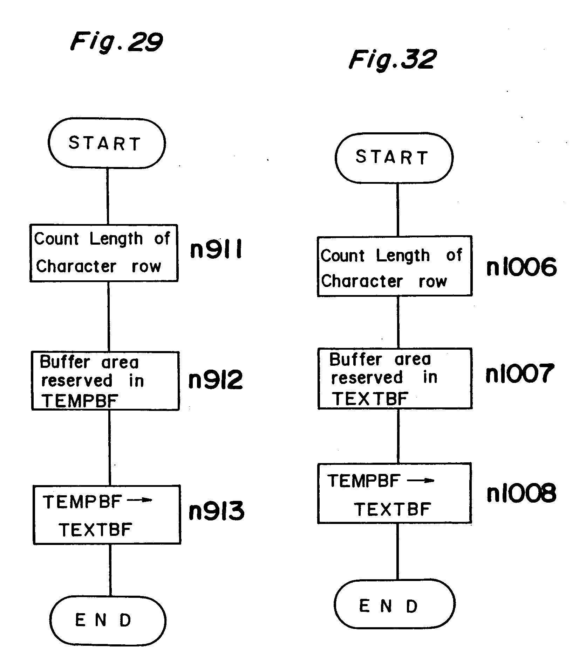

Fig. 29 shows a flow chart for moving one or more characters being classified either of three Types A, B and C.

Let us assume that steps n901 to n909 of Fig. 28 have been completed prior to the start of this flow chart and that the character row to be moved has been stored in the temporary buffer TEMPBF.

As indicated in Fig. 29, the number of characters of the character row designated to be moved is counted to know the length thereof at step n911. At step n912, a buffer area is reserved in the temporary buffer TEMPBF from the address thereof corresponding to the position of the cursor so as to have a length same to that of the character row to be moved.

Then, the contents of the temporary buffer TEMPBF are copied into the text buffer TEXTBF. Then, the specified character row is moved to a desired position.

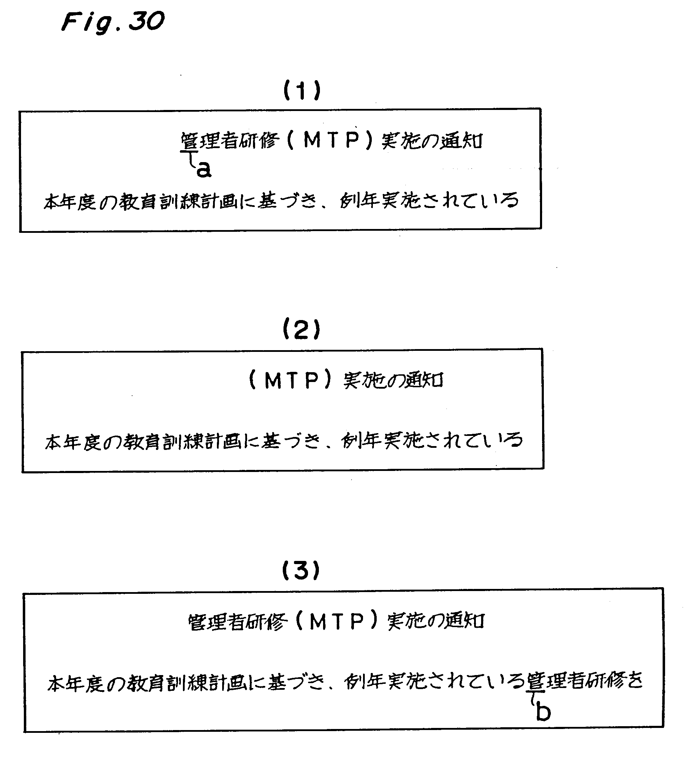

An example of deletion and/or movement process is shown in Fig. 30. The text shown in Fig. 30(1) is readable as follows.

"Announcement of Manager Training Program (MTP)"

... being executed every year, according to the educational training plan of this year ...".

If the cursor is moved to the head of a character row as shown in Fig. 30(1) and, the delete key is pushed down, the character row of first five Chinese characters readable as "Manager Training Program" is deleted on the display and is stored into the temporary buffer TEMPBF. This state is shown in Fig. 30(2).

If UNDO key provided for suspending the execution of a function is pushed in this state, the character row is restored to the original state.

When the cursor is moved to a position b into which the character row is to be inserted desirably as is shown in Fig. 30(3) and, then, UNDO key is operated, the character row is inserted thereat.

According to the preferred embodiment, deletion and/or movement of a character row can be done only by indication with the cursor. Therefore, operability in editorial jobs is greatly improved.

The idea about the deletion and/or movement of a character row with use of the cursor is extended to a deletion and/or movement of a sentence.

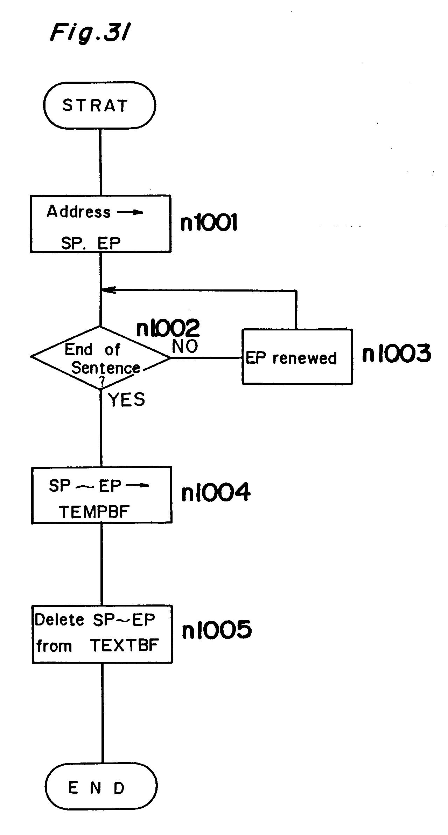

Fig. 31 shows a flow chart therefor. Assume that a text being comprised of a plurality of sentences has been stored in the text buffer TEXTBF.

At step n1001, the address data corresponding to the position of a character designated by the cursor is stored respectively into the start pointer SP and the end pointer EP provided in the memory.

At step n1002, it is decided whether the end pointer EP indicates an ending mark or symbol each of which shows the end of a sentence. If it does not indicated an ending mark, the process is proceeded to step n1003 at which the end pointer EP is renewed. The end of a sentence is thus searched according to the character code given by repeating the renewal process of the end pointer EP.

When the end of a sentence is found out by the end pointer, the process is proceeded to step n1004 at which the character row comprising a sentence to be deleted which is defined between the start pointer SP and the end pointer EP is stored into the temporary buffer TEMPBF temporarily.

At step n1005, the objective sentence is deleted in the text buffer TEXTBF.

Accordingly, it becomes possible to deleted a sentence or character row including all characters from the character indicated by the cursor to the end mark of the sentence at one time.

Fig. 32 shows a flow chart for processing movement of a sentence.

Assume that step n1001 to n1004 have been executed before the start of step n1006, namely a sentence or character row to be moved has been stored in the temporary buffer TEMPBF.

At step n1006, the number of characters included in the sentence or the character row is counted to know the length thereof.

At step n1007, a buffer area is reserved in the temporary buffer TEMPBF from the address corresponding to the position of the cursor so as to have the same length to that of the sentence or the character row to be deleted.

At step n1008, the content of the temporary buffer TEMPBF is copied into the text buffer TEXTBF. Thus, the sentence designated can be moved.

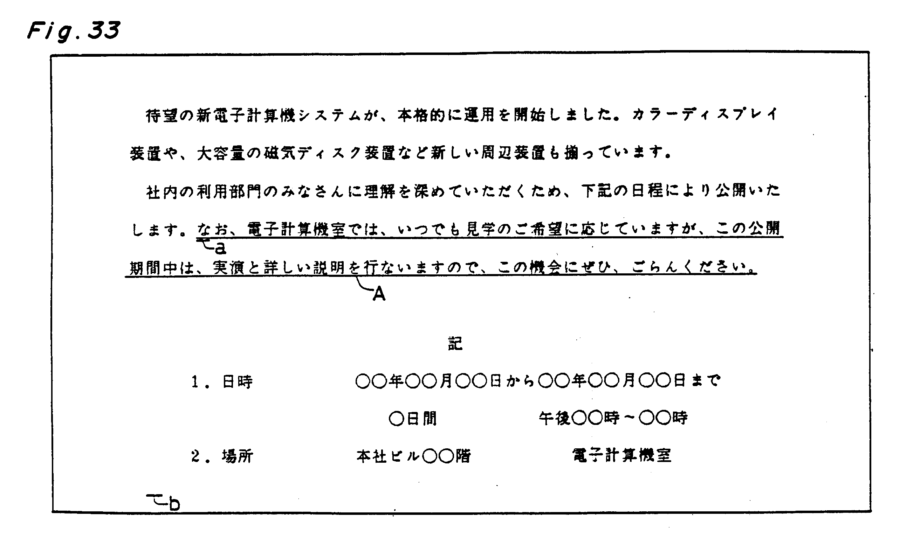

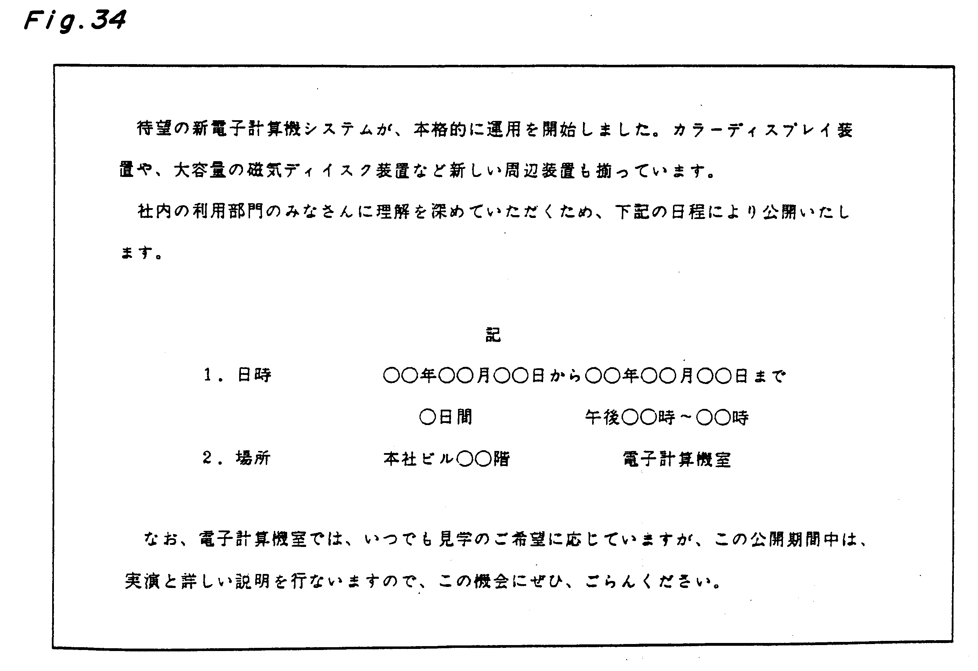

Figs. 33 and 34 show respectively Japanese texts to be edited.

Referring to Fig. 33, proceedings for moving a sentence will be explained according to the flow chart of Fig. 32.

In the Japanese text shown in Fig. 32, the sentence A to be moved is shown underlined. The cursor is moved to the position "a" of the head character of the sentence A and, then, a delete key provided for deleting sentence is operated. When the delete key is operated, the sentence is disappeared on the CRT display.

Thereafter, the cursor is moved to a position indicated by the reference "b" in Fig. 33 from which the sentence is inserted.

When the UNDO key for designating movement of a sentence is operated, the sentence A is appeared at the position b as shown in Fig. 34.

⟨Designation of Style⟩

In the Japanese language, there are many expressions for ending a sentence. Normally, the predicate is ended with the word "dearu" or "suru". In the polite expression, the predicate, usually every Japanese sentence is ended therewith, is ended with the word "desu" or "masu". Hereinafter, the former expression is called "first style" and the latter "second style".

Let us consider the translation of an English sentence "This is a pen." into Japanese.

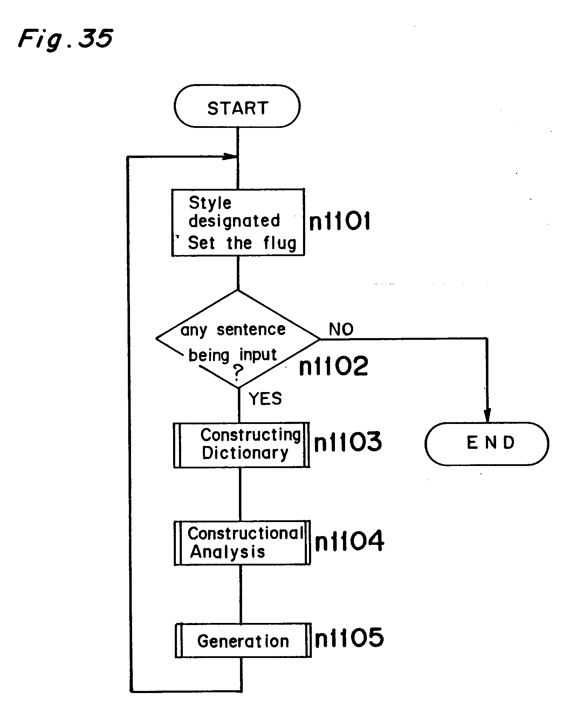

Fig. 35 shows a flow chart of the main routine to be executed by CPU.

When the program is started, a style for Japanese translation is designated at step n1101. If the first style is to be selected, the flag provided therefor is not set. This flag is set when the second style is to be selected. Namely, the translation machine usually translate the original into Japanese in the first style when any special indication is not entered.

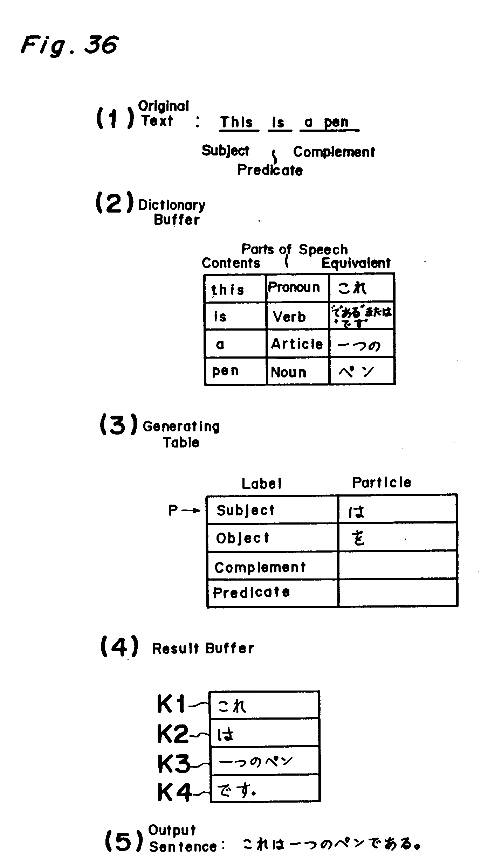

At step n1102, it is decided whether or not there is the original text to be translated. In this example, the original text is a sentence "This is a pen." as shown in Fig. 36(1).

If there is no text to be translated, the process is completed.

When there is the original, the process is proceeded to step n1103 at which the morphemic analysis is done. The part of speech and the equivalent with respect to each word are found out as shown in Fig. 36-(2).

At step n1104, the constructional analysis is executed to determine labels as indicated in Fig. 36(1).

At step n1105, the translation is generated with use of the first style designated at step n1101.

Each of steps from n1103 to n1105 defined as a separated subroutine. When the subroutine of step n1105 is completed, the process is returned to step n1101.

In the flow chart shown in Fig. 35, the step n1101 for designating the style is provided in the loop thereof and, therefore, it is possible to designated the style with respect to every sentence.

If it is desirable to designated the style through all sentences comprising an original text, the step n1101 is provided so as to be executed out of the loop of the flow chart of Fig. 35. It is also possible by defining the program so as for the flag state to be maintained during the translation process when it is designated once. In this case, the process is returned from step n1105 to step n1102.

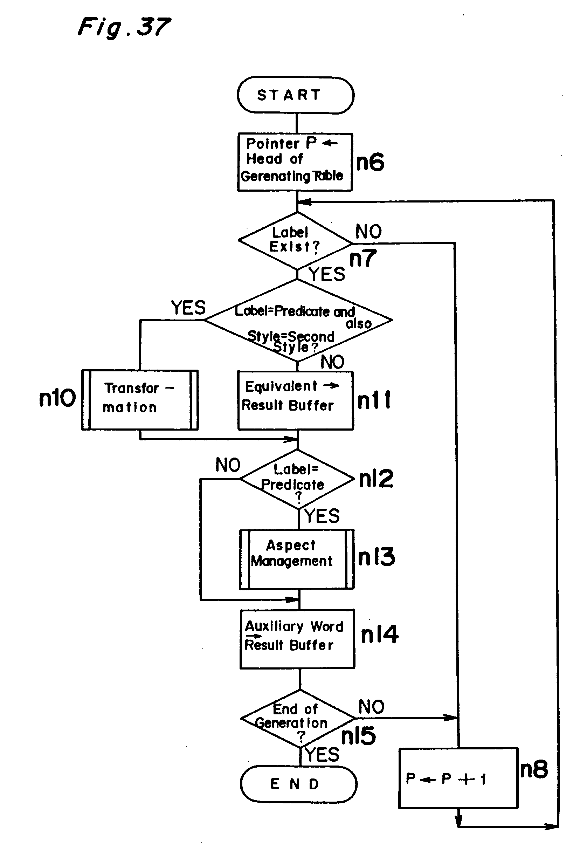

Fig. 37 shows a flow chart of the subroutine of step n1105.

When the subroutine is started, the pointer P is set at the head of a generation Table shown in Fig. 36-(3) at step n1106. At step n1107, it is decided whether or not the label indicated by the pointer exists in the original as shown in Fig. 36(1).

When there is not the label in the original, the process is proceeded to step n1108. At step n1108, the pointer P is increased by one and, then, the process is returned to step 1107. If there is the label indicated by the pointer in the original, the process is proceeded from n1107 to n1109.

At step n1109, it is decided whether or not the label indicated is the predicate and the style designated is the second style. If the label is the predicate and the style is designated as the second style, the process is proceeded to step n1110 at which the predicate is transformed from the first style to the second style and the process is proceeded to n1112.

If it is decided at step n1109, that the label indicated by the pointer is not the predicate or the style is designated to the first style, the process is proceeded to step n1111. At step n1111, Japanese equivalents are stored into areas K1 to K4 of the Result Buffer as shown in Fig. 36(4).

At next step n1112, it is decided whether or not the label indicated by the pointer is the predicated. If it is so, the process is proceeded to step n1113.

At step n1113, the conjugation process is executed. In the process, the predicated is conjugated according to the tense, the negative etc. When step n1113 is completed, the process is proceeded to step n1114.

At step n1114, auxiliary word corresponding to the label indicated by the pointer is stored into corresponding buffer area of the Result Buffer as shown in Fig. 36(4).

At step n1115, it is decided whether or not the generation of the sentence has been completed.

If it has not been completed yet, the process is proceeded to step n1108 to increase the pointer by one. After the increment of the pointer, the process is returned to step n1107. When the generation is completed, the process according to the generation subroutine is finished.

Hereinafter, the process according to the flow chart of Fig. 37 will be explained by way of example in which the original to be translated is a sentence "This is a pen.".

At step n1106, the head of the generation Table is input into the pointer. As shown in Fig. 36(3), the head of the generation Table is the subject (shugo).

At step n1107, it is decided whether or not the label indicated by the pointer P is included in the original of Fig. 36(1). In this case, the subject is included in the original and, therefore, the process is proceeded to step n1109. Since the label is the subject at step n1109, the process is proceeded to step n1111.

At step n1111, the subject "this" is consulted with the translation dictionary and the equivalent "kore" corresponding thereto is read out and is stored into the area K1 of the Result Buffer. It is decided whether the label is the predicate at step n1112. But, in this case, the label is the subject and, therefore, the process is proceeded to step n1114 at which the auxiliary word "wa" contained in the generation Table is stored into the area K2 of the Result Buffer.

At step n1115, it is decided that the generation is not completed and the pointer P is increased by one at step n1108, to indicate the object being the next label. Since the original does not include the object, the process is proceeded from step n1107 to step n1108 to increase the pointer by one. Therefore, the pointer indicates the complement. Since the complement is included in the original, the process is proceeded from step n1107 to step n1109. The label is the complement at step n1109, the process is proceeded to step n1111 at which the equivalent "hitotsu no pen" corresponding to "a pen" is stored into the area K3 of the Result Buffer.

It is decided at step n1112 that the label is not the predicate and the process is proceeded to step n1114.

At step n1114, nothing is stored into the Result Buffer, since there is no auxiliary words corresponding to the complement in the generation Table.

At step 1115, it is decided that the generation is not completed and, at step n1108, the pointer P is increased by one to indicate the predicate. Since the predicate indicated by the pointer P is included in the original, the process is proceeded from step n1107 to step n1109.

When the style is designated to the second style, the process is proceeded to step n1110 since the predicate indicated by the pointer is included in the original. At step n1110, the equivalent "desu" in the second style is chosen among equivalents listed in the translation dictionary and is stored into the area K4 of the Result Buffer. The label is the predicate at step n1112, the process is proceeded to step n1113 to execute the conjugation process. At step n1114, it is decided that there is no auxiliary words. Therefore, the process is proceeded to step n1115. At step n1115, it is decided that the generation has been completed and, therefore, the process is finished.

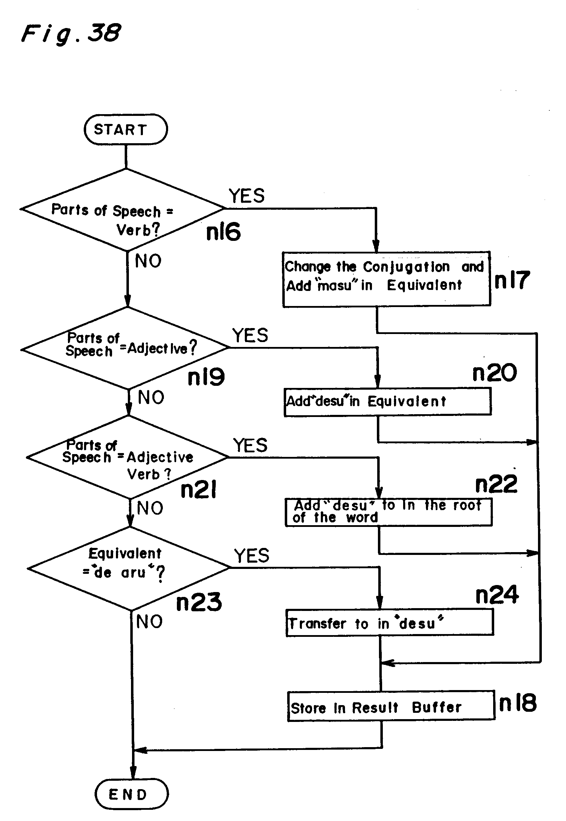

Fig. 38 shows a flow chart of a program for transforming the style from the first to the second.

At step n1116, it is decided whether or not the part of speech of the predicate is a verb. If it is so, the process is proceeded to step n1117. At step n1117, the verb is so conjugated as to meet with the second style and "masu" is added to the end of the verb conjugated. At step n1118, the equivalent obtained is stored into the Result Buffer.

If the part of speech is not the verb, the process is proceeded to step n1119. At step n1119, it is decided whether or not the part of speech is the adjective. If it is so, the process is proceeded to step n1120. At step n1120, the word "desu" in the second style is added next to the equivalent and, then, the equivalent obtained at step n1120 is stored into the Result Buffer.

If it is decided that the part of speech is not the adjective, the process is proceeded to step n1121 at which it is decided whether or not the part of speech is the adjective verb. If it is so, the process is proceeded to step n1122. At step n1122, the word "desu" in the second style is added to the trunk of the predicated and the equivalent obtained is stored into the Result Buffer.

If it is decided that the part of speech is not the adjective verb, the process is proceeded to step n1123. At step n1123, it is decided whether or not the equivalent is ending in the form of "-dearu". If it is decided that the equivalent is ending in the form of "-dearu", the process is proceeded to step n1124 to transform "-dearu" into "-desu". After the transformation, the equivalent obtained is stored into the Result Buffer.

When it is decided, at step n1123, that the equivalent is not ending in the form of "-dearu", the process is ended since it is supposed to be wrongly proceeded.

15

According to the present embodiment, it becomes possible to obtain the translation expressed in the style designated according to the necessity of the user.

Further it is possible to transform from the literary style to the colloquial style or vice versa.

## Claims

1. A translation machine comprising
   - a central processing unit (1) for processing a translation process and other necessary processes,
   - a main memory (2) for storing programs which are developed in order to execute the translation process,
   - a data entry means for entering data necessary for translation processing, such as an original text in a source language,
   - a display means (3) for displaying data such as translations of the original text into a target language, and
   - a translation module (5) for executing, with respect to the original text in the source language to be translated, the steps of

   consulting a translation dictionary (51) with respect to every word included in the original text which is provided in the translation module,

   morphemic analysing for obtaining grammatical data such as a part of speech and an equivalent of the word,

   constructional analysing for determining the construction of a sentence in the source language, such as subordinations between or among the words, and

   generating the target language (54) according to the results of the foregoing analysis,
   **characterized in that**
   - there are provided means for displaying the designated source language and the target language being equivalent thereto on the display means (3) in such a manner that both are corresponded to each other and,
   upon operating cursor movement keys and function keys of said data entry means, a plurality of translations are capable to be obtained according to the possible subordinations between and among the words and be displayed so as to be able to designate one of them.

2. A translation machine according to claim 1, in which all of the translations contained in the dictionary (51) and corresponding to a word designated are displayed and one of them can be designated as a correct equivalent.

3. A translation machine according to claim 1 or 2, in which the source language to be displayed corresponding to the target language is a word contained in the original text.

4. A translation machine according to any one of claims 1 or 2, in which the source language to be displayed corresponding to the target language is a sentence.

5. A translation machine according to any one of claims 1 to 4, in which a word included in the designated sentence can be designated further and said word designated and the equivalent are displayed in a special display format such as highlight.

6. A translation machine according to any one of claims 1 to 5, in which a user's dictionary is further provided for registering data about each of words not having been contained in the translation dictionary.

7. A translation machine according to any one of claims 1 to 6, in which means for designating one of styles upon translating the original text is further provided and the translation is generated after transforming it into the style designated.

16

8. A translation machine according to any one of claims 1 to 7, in which further a buffer means is provided for storing character data designated to be edited temporarily and, when designated, the data are transferred from a buffer in which they have been stored into said buffer means for an editorial proceeding.

9. A translation machine according to claim 8, in which designated character data are deleted from the translation.

10. A translation machine according to claim 8, in which designated character data are moved to a designated position in the translation.

**Revendications**

1. Machine à traduire comportant
   - une unité de traitement centrale (1) destinée à traiter un processus de traduction et d'autres processus nécessaires,
   - une mémoire principale (2) destinée à stocker des programmes développés afin d'exécuter le processus de traduction,
   - des moyens de saisie de données destinés à saisir des données nécessaires pour procéder à une traduction, telles qu'un texte original dans une langue de départ,
   - des moyens d'affichage (3) pour afficher des données, telles que des traductions du texte original dans une langue d'arrivée, et
   - un module de traduction (5) destiné à exécuter, par rapport au texte original dans la langue de départ à traduire, les étapes qui consistent à :
      consulter un dictionnaire de traduction (51) par rapport à chaque mot inclus dans le texte original, prévu dans le module de traduction,
      analyser des morphèmes pour obtenir des données grammaticales, telles qu'un élément de discours, et un équivalent du mot,
      analyser une construction pour déterminer la construction d'une phrase dans la langue de départ, telle que des subordinations entre et parmi les mots, et
      produire la langue d'arrivée (54) en fonction des résultats de l'analyse précédente,
   **caractérisée en ce que**
   - des moyens sont prévus pour afficher la langue de départ désignée et la langue d'arrivée équivalente à celle-ci sur les moyens d'affichage (3), de telle façon qu'elles soient toutes deux mises en correspondance l'une avec l'autre et,
      par un actionnement de touches de déplacement de curseur et de touches de fonctions desdits moyens de saisie de données, plusieurs traductions peuvent être obtenues en fonction des subordinations possibles entre et parmi les mots, et affichées de façon que l'on puisse désigner l'une d'elles.

2. Machine à traduire selon la revendication 1, dans laquelle toutes les traductions contenues dans le dictionnaire (51) et correspondant à un mot désigné sont affichées, l'une d'elles pouvant être désignée comme étant un équivalent correct.

3. Machine à traduire selon la revendication 1 ou 2, dans laquelle la langue de départ destinée à être affichée correspondant à la langue d'arrivée est un mot contenu dans le texte original.

4. Machine à traduire selon la revendication 1 ou 2, dans laquelle la langue de départ destinée à être affichée correspondant à la langue d'arrivée est une phrase.

5. Machine à traduire selon l'une quelconque des revendications 1 à 4, dans laquelle un mot inclus dans la phrase désignée peut être désigné à nouveau, ledit mot désigné et son équivalent étant affichés dans un format d'affichage spécial, tel qu'une mise en évidence.

6. Machine à traduire selon l'une quelconque des revendications 1 à 5, dans laquelle il est également prévu un dictionnaire d'utilisateur pour enregistrer des données concernant chacun des mots qui n'ont pas été inclus dans le dictionnaire de traduction.

**7.** Machine à traduire selon l'une quelconque des revendications 1 à 6, dans laquelle il est aussi prévu des moyens pour désigner l'un de plusieurs styles lors de la traduction du texte original, la traduction étant produite après avoir été transformée dans le style désigné.

**8.** Machine à traduire selon l'une quelconque des revendications 1 à 7, dans laquelle il est en outre prévu des moyens tampons pour stocker des données de caractères désignées pour être éditées temporairement, les données étant, lorsqu'elles sont désignées, transférées d'un tampon dans lequel elles ont été stockées dans lesdits moyens tampons en vue d'une procédure d'édition.

**9.** Machine à traduire selon la revendication 8, dans laquelle des données de caractères désignées sont supprimées de la traduction.

**10.** Machine à traduire selon la revendication 8, dans laquelle des données de caractères désignées sont déplacées jusqu'à une position désignée dans la traduction.

**Patentansprüche**

**1.** Übersetzungsgerät mit
- einer zentralen Verarbeitungseinheit (1) zum Verarbeiten eines Übersetzungsvorgangs und anderer erforderlicher Vorgänge,
- einem Hauptspeicher (2) zum Speichern von Programmen für die Ausführung des Übersetzungsvorgangs,
- einer Dateneingabeeinrichtung zum Eingeben von Daten, die zur Übersetzungsverarbeitung erforderlich sind, zum Beispiel eines Originaltexts in einer Ausgangssprache,
- einer Anzeigeeinrichtung (3) zum Anzeigen von Daten, wie zum Beispiel Übersetzungen des Originaltexts in eine Zielsprache, und
- einem Übersetzungsmodul (5), das, in bezug auf den zu übersetzenden Originaltext in der Ausgangssprache, die folgenden Schritte durchführt:
   - Heranziehen eines Übersetzungswörterbuchs (51) für jedes Wort, das in dem in dem Übersetzungsmodul vorhandenen Originaltext enthalten ist,
   - Durchführen einer Morphemanalyse zum Erhalten von grammatischen Daten, zum Beispiel eines Satzteils und eines Äquivalents eines Wortes,
   - Durchführen einer Strukturanalyse zum Bestimmen der Struktur eines Satzes in der Ausgangssprache, zum Beispiel von Abhängigkeiten zwischen oder unter den Wörtern, und
   - Erzeugen der Zielsprache (54) nach den Ergebnissen der vorhergegangenen Analyse,
dadurch gekennzeichnet, daß
- Einrichtungen zum Anzeigen der gewählten Ausgangssprache und der zu dieser äquivalenten Zielsprache auf der Anzeigeeinrichtung (3) in miteinander korrespondierender Weise vorgesehen sind,
- auf das Betätigen von Cursor-Bewegungstasten der Dateneingabeeinrichtung hin, je nach den möglichen Abhängigkeiten zwischen und unter den Wörtern, mehrere Übersetzungen erhalten und angezeigt werden können, so daß eines von diesen auswählbar ist.

**2.** Übersetzungsgerät nach Anspruch 1, bei dem alle der in dem Wörterbuch (51) enthaltenen und einem gewählten Wort entsprechenden Übersetzungen angezeigt werden und eines von diesen als korrektes Äquivalent auswählbar ist.

**3.** Übersetzungsgerät nach Anspruch 1 oder 2, bei dem die anzuzeigende, der Zielsprache entsprechende Ausgangssprache ein in dem Originaltext enthaltenes Wort ist.

**4.** Übersetzungsgerät nach Anspruch 1 oder 2, bei dem die anzuzeigende, der Zielsprache entsprechende Ausgangssprache ein Satz ist.

**5.** Übersetzungsgerät nach einem der Ansprüche 1 bis 4, bei dem ein in dem gewählten Satz enthaltenes Wort weiter auswählbar ist und das ausgewählte Wort und das Äquivalent in einem besonderen Anzeigeformat, zum Beispiel durch optische Hervorhebung, angezeigt werden.

18

6. Übersetzungsgerät nach einem der Ansprüche 1 bis 5, bei dem ferner ein Anwender-Wörterbuch vorgesehen ist, um Daten über jedes Wort zu speichern, das nicht im Übersetzungswörterbuch enthalten ist.

7. Übersetzungsgerät nach einem der Ansprüche 1 bis 6, bei dem ferner eine Einrichtung zum Wählen eines Übersetzungsstils für den Originaltext vorgesehen ist und die Übersetzung erzeugt wird, nachdem sie in den gewählten Stil umgesetzt ist.

8. Übersetzungsgerät nach einem der Ansprüche 1 bis 7, bei dem ferner eine Puffereinrichtung zum Speichern von Zeichendaten, die für ein temporäres Editieren bestimmt sind, vorgesehen ist und diese Daten, wenn sie bestimmt sind, von einem Puffer, in dem sie gespeichert waren, für einen Editionsvorgang in die Puffereinrichtung übertragen werden.

9. Übersetzungsgerät nach Anspruch 8, bei dem die bestimmten Zeichendaten aus der Übersetzung gelöscht werden.

10. Übersetzungsgerät nach Anspruch 8, bei dem die bestimmten Zeichendaten an eine ausgewählte Stelle in der Übersetzung bewegt werden.

*Fig.1*

*Fig.2*

## Fig.3

Source Language

① Consulting Dictionary

Target Language

② Morphemic Analysis ----→ ⑩ Morphemic Generation

③ Constructional Analysis ----→ ⑨ Constructional Generation

④ Meaning Analysis ----→ ⑧ Meaning Generation

⑤ Contextual Analysis ----→ ⑦ Contextual Generation

⑥ Intermediate Language

## Fig.4

5

Source Language →

| 51 | 52 | 53 | 54 |
|---|---|---|---|
| Means for Consulting Dictionary Morphemic Analysis | Means for Constructional Analysis | Means for Transferring Language | Means for Generating Target Language |

→ Target Language

# Fig.5

Buffer A —    Original Text  Buffer

| t | h | i | s |  |  |  |  |
|---|---|---|---|---|---|---|---|
| i | s |  |  |  |  |  |  |
| a |  |  |  |  |  |  |  |
| p | e | n |  |  |  |  |  |
| . |  |  |  |  |  |  |  |

(1)

Buffer B —    A Part of the Buffer after Consulting  Dictionary

(2)

| this — — | 代名詞 (Pronoun) | (Demonstrative Adjective ) |  |
|---|---|---|---|
| is — — | 動詞    (Verb) |  |  |
| a — — | 冠詞    (Article) |  |  |
| pen — — | 名詞    (Noun) |  |  |

Buffer C —    Buffer after Constructional Analysis

(3)

Sentence — Subject — Noun Phrase — Pronoun — this; Predicate — Verb — is; Noun Phrase — Article — a, Noun — pen

## Fig.5

Buffer  D —  Buffer  after  Analyzing  by Tree  Strcture

**(4)**

Sentence

Subject         Predicate

Noun Phrase   Noun Phrase   Verb

Pronoun        Noun

これ            ペン       である

Kore           Pen        DEARU

(This )        (pen)       ( is )

**(5)**

Buffer  E —   Buffer  for  Outputting  the Sentence

これはペンである。

( Kore   wa    pen   de   aru. )

EP 0 175 357 B1

## Fig. 6

24

# *Fig.7*

## (1)

◆ Time flies like an arrow.

① ②

## (2)

Time flies like an arrow.

① ②

Time flies like an arrow.

③ ④

## (3)

Time flies like an arrow.

## *Fig.8*

### (1)

```
                          Sentence

          Subject                    Predicate

   Noun Phrase    Verb                         Noun Phrase

      Pronoun                 Noun Phrase           Prepositional Phrase

                          Article    Noun      Preposition      Noun Phrase

                                                            Numeral    Noun


         I       bought      a       car        with     200      dollars
```

### (2)

```
   I     bought      a    car     with     200     dollars
```
F

*Fig.8*

**(3)**

**(4)**

*Fig.9*

I   bought   a   car   with   200   dollars.

P

Q

*Fig.10*

I   bought   a   car   with   200   dollars.

S       R       P

## Fig.11

### (1)

**4la**        **4lb**

| This is a big apple tree . | |

~41

## Fig.11

### (2)

**4la**        **4lb**

| R<br>This [s] a big apple tree .<br>C   S  L | これは　1本の　大きな　リンゴの<br>木　[での] R<br>. |

~41

## Fig.12

**START**

n101 — Cursor exist in Space Area ?

n103 — Cursor in Original Display Area ?

n102 — Change Highlight Display into Ordinal Display

n104 — Count No. of Word of Original Sentence

n106 — Count No. of Word of Translated Sentence

n105 — Search No. of Word of Translated Sentence

n107 — Search No. of Word of Original Sentence

n108 — Highlight Display of Word of Original and Translated Sentences Pointed out by Cursor

**END**

**Fig. 13**

START

Set Level — n201

Input — n202

Morphemic Analysis — n203

Display Translation — n204 — NO / YES

n205 — Display Translation

n206 — Select Equivalent

n207 — ·Constructual analysis ·Transformation ·Generation

n208 — Display of Result

Result Correct — n209 — NO / YES

n210 — Result Output

Next Sentence ? — n211 — YES / NO

END

Display Translation — n212 — NO / YES

n213 — Display Translation

Modification Possible — n214 — NO / YES

n215 — Modification

## Fig.14

G1    G2       G3   G4    G5

F1— Time    flies    like    an    arrow

F2— (名)時間 (名)蝿  (動)好む(冠)ある(名)矢

H1    H2       H3    H4    H5

## Fig.15

I  bought  a car    with    200  dollars.

P

Q

## Fig. 16

START

- Input Source Language — n301
- Consulting Dictionary — n302
- Morphemic Analysis — n303
- Constructional Analysis — n304
- Transformation — n305
- Generation — n306

Print? n307
- NO
- YES

Side by Side Print? n308
- NO
- YES

n309 Set Print Buffer F from Buffer A and E

Print Content of Buffer E — n312

Print Content of Print Buffer F — n310

Next Sentence? n311
- YES
- NO

END

## Fig. 17

| I bought this car with 200 dollars. | 私は 200 ドルの 付いた この自動車を買った。 |

## Fig. 18

## Fig./9

```
                    ┌─────────────┐
                    │    START    │
                    └──────┬──────┘
                           │
        n50I  ┌────────────────────────┐
              │ Reference to Word Input │
              └────────────┬────────────┘
                           │
        n502        ◇ YES? ◇─────── NO ──────────────────┐
                           │                             │
                          YES                            │
        n503  ┌────────────────────────┐                 │
              │ Cursor                 │                 │
              │  →Column of Word       │                 │
              └────────────┬────────────┘                 │
                           │                             │
        n504  ┌────────────────────────┐                 │
              │      Word Input        │                 │
              └────────────┬────────────┘                 │
                           │                             │
        n505  ┌────────────────────────┐                 │
              │   Word ──→ Buffer      │                 │
              └────────────┬────────────┘                 │
                           │                             │
        n506  ┌────────────────────────┐                 │
              │     Cursor ──→         │                 │
              │  Head of Proposed      │                 │
              │  Parts of Speech       │                 │
              └────────────┬────────────┘                 │
                           │                 n5I2  ┌──────────────────┐
        n507  ┌────────────────────────┐           │  Reference to    │
              │    Move  Cursor        │           │  Registration    │
              │    to Correct          │           └─────────┬────────┘
              │    Position            │                     │
              └────────────┬────────────┘          n5I3    ◇ YES? ◇── NO ──→
                           │                                 │
        n508  ┌────────────────────────┐                    YES
              │  Part of Speech        │          n5I4  ┌──────────────────┐
              │      ──→ Buffer        │                │  Buffer ──→      │
              └────────────┬────────────┘                │  User's Dictionary│
                           │                            └─────────┬────────┘
        n509  ┌────────────────────────┐                          │
              │   Cursor ──→           │                          │
              │ Column of Equivalent   │                          │
              └────────────┬────────────┘                          │
                           │                                       │
        n5I0  ┌────────────────────────┐                          │
              │   Equivalent  Input    │                          │
              └────────────┬────────────┘                          │
                           │                                       │
        n5II  ┌────────────────────────┐                          │
              │ Equivalent ──→ Buffer  │                          │
              └────────────┬────────────┘                          │
                           │                                       │
                           └───────────────────┐       ┌──────────┘
                                                │       │
                                           ┌────────────────┐
                                           │      END       │
                                           └────────────────┘
```

## Fig. 20

(1)

> There is a word not given in the dictionary.
>
> Entry of the word (post of speech equivalent)?"YES"/"NO"

(2)

> Word = __?
>
> Parts of Speech = NOUN
>
> PRON
>
> ADJ
>
> ADV
>
> VERB
>
> Equivalent =

(3)

> Word = book
>
> Parts of Speech = ◆NOUN
>
> PRON
>
> ADJ
>
> ADV
>
> VERB
>
> Equivalent =

## Fig. 20

(4)

```
Word  =
Parts of
Speech =  NOUN
           PRON
         ◆ADJ
           ADV
           VERB
Equivalent =
```

(5)

```
Word   =  book
Parts of
Speech =  NOUN




Equivalent=
```

(6)

```
Register in User's Dictionary? "YES"/ "NO"
```

## Fig. 2l

```
        ┌──────────┐
        │  START   │
        └────┬─────┘
             │
    ┌────────┴────────┐
    │ Word Input →    │   n601
    │    Buffer       │
    └────────┬────────┘
             │
    ┌────────┴────────┐
    │ Count Number of │   n602
    │ Letters of      │
    │ Word Input      │
    └────────┬────────┘
             │
    ┌────────┴────────┐
    │Dictionary Pointer│  n603
    │ — Head of       │
    │ Dictionary      │
    └────────┬────────┘
             │
             │        n605
         ◇───┴───◇      NO      ┌────────────────┐
        Letters          ──────▶│ Set Dictionary │  n604
       Coincide?                │ Pointev at + 1 │
         ◇───┬───◇              └────────────────┘
           YES
    ┌────────┴────────┐
    │ Display Words   │   n606
    │ of Dictionary   │
    └────────┬────────┘
    ┌────────┴────────┐
    │ Set Dictionary  │   n607
    │ Pointer at + 1  │
    └────────┬────────┘
             │        n608
         ◇───┴───◇      YES
        Lettere          ──────▶
       Coincide
           ?
         ◇───┬───◇
            NO
        ┌────┴─────┐
        │  E N D   │
        └──────────┘
```

# Fig. 22

```
         ┌─────────┐
         │  START  │
         └────┬────┘
              │                    n70l
          ◇───┴────◇         NO
         ╱ Firt Letter ╲──────────────┐
         ╲ Coincide?   ╱               │
          ◇────┬───◇                   │
          YES  │           n702        │
          ◇────┴────◇        NO        │
         ╱ Second Letter ╲─────────────┤
         ╲  Coincide?    ╱             │
          ◇─────┬───◇                  │
          YES   │                      │
                ┊                      │
                ┊                      │
                ┊         n70m         │
          ◇─────┴────◇       NO        │
         ╱  mth Letter ╲───────────────┤
         ╲  Coincide?  ╱               │
          ◇──────┬──◇                  │
          YES    │◄─────────────────────┘
            ┌────┴────┐
            │  E N D  │
            └─────────┘
```

## *Fig.23*

| |
|---|
| a |
| a b |
| a b c |
| a c |
| a c b |
| b |
| b a |
| b a c |
| b c |
| b c a |
| c |
| c a |
| c a b |
| c b |
| c b a |

## *Fig.24*

**(1)**

A1 — Word = b a

B2 —
1  b a
2  b a c

**(2)**

A2 — Word = b

B2 —
1  b
2  b a
3  b a c
4  b c
5  b c a

## Fig.25

```
                    START

n801
              Word  Input

n802
       Dictionary pointer ──→
                   Head of Dictionary


n803
            Dictionar Word              NO
             ──→ Word Input ?

n805            YES                    n804
       Information of Dictionary              Set Dictiorary
              ──→ Display                     Pointer at + 1

n806
            Change Equivalent ?        NO

n807                YES
       Reversal Display of Equivalent
       Correspord With Word Displayed
       among Translations

n808
       Cursor ──→ Head  of Equivalent
                          Column

n809
              Move  Cursor

n810
       Equivalent on Reversal
              Display ──→ Delete

n811
       Equivalent  of  Dictionary
                   ──→ Insert


                    E N D
```

## Fig.26

(1) | I read a <u>book</u>.

(2) | 単語 = book

(3)

| Word | Parts of Speed | Equivalent | |
|------|----------------|------------|---|
| book | 名詞 | 1 <u>本</u>. 書物 | Hon·Shomotsu (Literary Work) |
| | | 2 台本 | Daihon (Libretto) |
| | | 3 聖書 | Seisho (Bible) |

(4)

| Word | Parts of Speed | Equivalent | |
|------|----------------|------------|---|
| book | 名詞 | 1 本. 書物 | Hon·Shomotsu (Literary Work) |
| | | 2 <u>台本</u> | Daihon (Libretto) |
| | | 3 聖書 | Seisho (Bible) |

(5) | 私は 本 を読む.

(6) | 私は台本を読む.

*Fig. 27*

今度／の／選挙／はまさに／ TV選挙 ／の／感／があった／
・／連邦政府／は／両候補／に／約3000ドル／づつの／運動
賃金／をだしたが／、／大半／は／テレビ／の／政見放送／に
／使／われたという／．／長短／さまざまの／選挙CM／が／
次々／に／放映／された／．／テレビ討論／もあった／．／

Sentences above are readable as follows;

The election really had an appearance of TV-election.

The Federal Government payed about 3,000 dollars as campaign

funds to each of the candidates, and it is said that most of

all were used for a TV broadcast of political opinions.

Various lengths of commercial films of election were telecasted

one after another.   There were television debates as well.

Fig. 28

START

Addres characters
designated by cursor   n901
⟶ SP, EP

Belong to
word C?   n902
YES / NO

Belong to
word B?   n903
YES / NO

EP renewed   n904

EP renewed   n906

Belong to
word A?   n905
YES / NO

Belong to
word B?   n907
YES / NO

EP — I   n908

Designated woods   n909
⟶ TEMPBF

Delete words from   n910
TEMPBF

END

## Fig.29

START

| Count Length of Character row | n911 |

| Buffer area reserved in TEMPBF | n912 |

| TEMPBF → TEXTBF | n913 |

END

## Fig.32

START

| Count Length of Character row | n1006 |

| Buffer area reserved in TEXTBF | n1007 |

| TEMPBF → TEXTBF | n1008 |

END

*Fig.30*

(1)

| |
|---|
| 管理者研修（MTP）実施の通知<br>Ⴀa<br><br>本年度の教育訓練計画に基づき、例年実施されている |

(2)

| |
|---|
| （MTP）実施の通知<br><br>本年度の教育訓練計画に基づき、例年実施されている |

(3)

| |
|---|
| 管理者研修（MTP）実施の通知<br><br>本年度の教育訓練計画に基づき、例年実施されている管理者研修を<br>Ⴀb |

## Fig.31

```
        ( STRAT )
            |
   ┌─────────────────┐
   │ Address ──►     │   n1001
   │   SP. EP        │
   └─────────────────┘
            |
            |◄──────────────────┐
            |                    |
         n1002                   |
          ╱────────╲    NO  ┌──────────────┐
         ╱ End  of  ╲───────│ EP renewed   │  n1003
         ╲ Sentence ╱       └──────────────┘
          ╲────────╱
             ? 
            YES
            |
   ┌─────────────────┐
   │ SP ~ EP ──►     │   n1004
   │   TEMPBF        │
   └─────────────────┘
            |
   ┌─────────────────┐
   │ Delete SP~EP    │   n1005
   │ from  TEXTBF    │
   └─────────────────┘
            |
        ( E N D )
```

## Fig.33

待望の新電子計算機システムが、本格的に運用を開始しました。カラーディスプレイ

装置や、大容量の磁気ディスク装置など新しい周辺装置も揃っています。

　社内の利用部門のみなさんに理解を深めていただくため、下記の日程により公開いた

します。なお、電子計算機室では、いつでも見学のご希望に応じていますが、この公開

期間中は、実演と詳しい説明を行ないますので、この機会にぜひ、ごらんください。

a

A

記

1．日時　　　　　　　○○年○○月○○日から○○年○○月○○日まで

　　　　　　　　　　　○日間　　　　　　午後○○時〜○○時

2．場所　　　　　　　本社ビル○○階　　　　電子計算機室

b

EP 0 175 357 B1

**Fig. 34**

待望の新電子計算機システムが、本格的に運用を開始しました。カラーディスプレイ装置や、大容量の磁気ディイスク装置など新しい周辺装置も揃っています。

社内の利用部門のみなさんに理解を深めていただくため、下記の日程により公開いたします。

<div align="center">記</div>

1．日時　　　　　　　○○年○○月○○日から○○年○○月○○日まで

　　　　　　　　　　　　○日間　　　　　　午後○○時～○○時

2．場所　　　　　　　本社ビル○○階　　　　　電子計算機室

なお、電子計算機室では、いつでも見学のご希望に応じていますが、この公開期間中は、実演と詳しい説明を行ないますので、この機会にぜひ、ごらんください。

EP 0 175 357 B1

*Fig.35*

```
                    ┌─────────────┐
                    │   START     │
                    └──────┬──────┘
                           │
                           ▼
                    ┌─────────────┐
                    │  Style      │
                    │  designated │  n1101
                    │ 'Set the flug│
                    └──────┬──────┘
                           │
                           ▼
                       ╱ any ╲
                    ╱ sentence  ╲  NO      ┌─────────────┐
                    ╲ being input╱ ──────▶ │   E N D     │
                       ╲  ?  ╱  n1102      └─────────────┘
                         │ YES
                         ▼
                  ┌──────────────┐
                  │ Constructing │ n1103
                  │  Dictionary  │
                  └──────┬───────┘
                         │
                         ▼
                  ┌──────────────┐
                  │ Constructional│ n1104
                  │   Analysis   │
                  └──────┬───────┘
                         │
                         ▼
                  ┌──────────────┐
                  │  Generation  │ n1105
                  └──────────────┘
```

51

## Fig. 36

**(1)** Original Text : <u>This</u> <u>is</u> <u>a</u> <u>pen</u>

Subject 〜 Complement
Predicate

**(2)** Dictionary Buffer

Parts of Speech

| Contents 〈 | | Equivalent |
|---|---|---|
| this | Pronoun | これ |
| is | Verb | である または ・です |
| a | Article | 一つの |
| pen | Noun | ペン |

**(3)** Generating Table

| | Label | Particle |
|---|---|---|
| P → | Subject | は |
| | Object | を |
| | Complement | |
| | Predicate | |

**(4)** Result Buffer

| | |
|---|---|
| K1 → | これ |
| K2 → | は |
| K3 → | 一つのペン |
| K4 → | です. |

**(5)** Output Sentence : これは一つのペンである。

*Fig. 37*

```
                    ┌─────────────┐
                    │   START     │
                    └─────────────┘
                           │
                    ┌──────────────┐
                    │  Pointer P ← │
                    │   Head  of   │  n6
                    │Gerenating Table│
                    └──────────────┘
                           │
                          ╱╲         NO
                        ╱ Label ╲─────────────┐
                        ╲ Exist? ╱  n7        │
                          ╲╱                  │
                         YES                  │
              YES        ╱╲                   │
        ┌─────────────╱ Label=Predicate and   │
        │             ╲   also              │
        │             ╲Style=Second        │
        │              ╲ Style? ╱  NO        │
        │                ╲╱                  │
   ┌─────────┐      ┌──────────────┐         │
n10│ Transfor-│     │ Equivalent → │         │
   │  mation  │     │Result Buffer │ n11     │
   └─────────┘      └──────────────┘         │
        │                 │                  │
        └─────────────────┤                  │
                      NO  ╱╲                  │
                  ┌─────╱ Label= ╲            │
                  │     ╲Predicate╱ n12       │
                  │       ╲ ? ╱               │
                  │        ╲╱                 │
                  │       YES                 │
                  │  ┌──────────────┐         │
                  │  │   Aspect     │ n13     │
                  │  │ Management   │         │
                  │  └──────────────┘         │
                  │         │                 │
                  └─────────┤                 │
                    ┌──────────────┐          │
                    │Auxiliary Word│ n14      │
                    │Result Buffer │          │
                    └──────────────┘          │
                           │                  │
                          ╱╲       NO         │
                        ╱ End of ╲────────────┤
                        ╲Generation╱          │
                         ╲  ?  ╱  n15         │
                          ╲╱                  │
                         YES          ┌──────────┐
                    ┌─────────┐       │ P ← P+1  │ n8
                    │  END    │       └──────────┘
                    └─────────┘
```

*Fig.38*

```
                    ┌─────────┐
                    │  START  │
                    └─────────┘
                         │
                         ▼
              ╱◇╲              YES
         Parts of Speech = ──────────────────┐
              Verb?                           │
              ╲◇╱    n16                      ▼
                │                  ┌────────────────────────┐
                │ NO               │Change the Conjugation  and │ n17
                │                  │Add "masu" in  Equivalent│
                ▼                  └────────────────────────┘
              ╱◇╲                              │
         Parts of  =Adjective?  YES            │
         Speech  ──────────────┐               │
              ╲◇╱   n19        │               │
                │              ▼               │
                │ NO    ┌─────────────┐ n20     │
                │       │Add "desu" in Equivalent│
                ▼       └─────────────┘          │
              ╱◇╲              │                 │
         Parts of           YES│                 │
         Speech =Adjective ────┼──────┐          │
              Verb?             │      │          │
              ╲◇╱   n21         │      ▼          │
                │               │  ┌──────────┐ n22│
                │ NO            │  │Add "desu" to in the root│
                │               │  │of  the  word│
                ▼               │  └──────────┘   │
              ╱◇╲              YES│                │
         Equivalent  ────────────┼─────┐          │
         = "de aru"?              │     │          │
              ╲◇╱    n23          │     ▼          │
                │                 │ ┌──────────┐ n24│
                │ NO              │ │Transfer to in "desu"│
                │                 │ └──────────┘   │
                │                 │     │◄─────────┘
                │                 ▼     ▼
                │            ┌──────────────┐ n18
                │            │Store in Result  Buffer│
                │            └──────────────┘
                │                 │
                ▼◄────────────────┘
            ┌─────────┐
            │  END    │
            └─────────┘
```